# EUROPÄISCHE PATENTSCHRIFT

(11) **EP 3 145 295 B1**
(45) Veröffentlichungstag und Bekanntmachung des Hinweises auf die Patenterteilung: **13.10.2021**
(21) Anmeldenummer: 15723947.6
(22) Anmeldetag: 20.05.2015
(51) Int. Cl.: A01K 1/12, A01J 5/017

(54) **ARMEINRICHTUNG FÜR EINE MELKSTANDANORDNUNG ZUM AUTOMATISCHEN MELKEN VON MILCHGEBENDEN TIEREN, PLATZTEILER EINER MELKSTANDANORDNUNG UND MELKSTANDANORDNUNG**
ARM DEVICE FOR A MILKING-PARLOUR ARRANGEMENT FOR THE AUTOMATIC MILKING OF DAIRY ANIMALS, DIVIDER FOR A MILKING-PARLOUR ARRANGEMENT, AND MILKING-PARLOUR ARRANGEMENT
SYSTÈME DE BRAS DESTINÉ À UNE INSTALLATION DE TRAITE AUTOMATIQUE D'ANIMAUX LAITIERS, PORTILLON DE SÉPARATION D'UNE INSTALLATION DE TRAITE ET INSTALLATION DE TRAITE

(30) Priorität: 20.05.2014 DE 102014107124
(43) Veröffentlichungstag der Anmeldung: 29.03.2017
(73) Patentinhaber: GEA Farm Technologies GmbH, 59199 Bönen (DE)
(72) Erfinder: KRONE, Otto, 49479 Laggenbeck (DE)
(74) Vertreter: Kleine, Hubertus
(86) Internationale Anmeldenummer: PCT/EP2015/061087
(87) Internationale Veröffentlichungsnummer: WO 2015/177198

(56) Entgegenhaltungen:
- WO-A1-2013/135842
- DE-A1- 4 113 700
- None

## Beschreibung

Die Erfindung betrifft eine Armeinrichtung für eine Melkstandanordnung zum automatischen Melken von milchgebenden Tieren nach dem Oberbegriff des Anspruchs 1. Die Erfindung bezieht sich auch auf einen Platzteiler einer Melkstandanordnung und auf eine Melkstandanordnung.

Eine derartige Armeinrichtung für eine Melkstandanordnung wird zum maschinellen bzw. automatischen Melken von milchgebenden Tieren verwendet. Eine solche Einrichtung wird auch allgemein als Melkroboter bezeichnet. Milchgebende Tiere sind beispielsweise Kühe, Ziegen, Schafe usw. Die Melkstandanordnung weist Melkstände auf, die durch Platzteiler getrennt sind. Der Melkvorgang kann mittels des Melkroboters automatisiert werden. Es sind z.B. Melkkarusselle im Einsatz.

Unter dem Begriff Melkstandanordnung sind Anordnungen von Melkständen zu verstehen, wobei eine Winkelstellung eines zu melkenden Tieres bzw. eine Winkelstellung einer gedachten Längsachse eines zu melkenden Tieres in einem Melkstand zu einem Referenzpunkt bzw. zu einer Referenzlinie zwischen 0° und 90° betragen kann. Als Referenzpunkt wird beispielsweise eine Grube oder ein durch Personal zugänglicher Bereich (z.B. Arbeitsgang) verwendet, welche der Aufenthaltsort des Melkpersonals ist. Als Referenzlinie wird beispielsweise die Längsseite einer geradlinigen Grube oder eine Tangente einer kreisförmigen Grube verwendet.

Melkstandanordnungen sind z.B. bewegliche und unbewegliche Melkstandanordnungen. Bewegliche Melkstandanordnungen sind z.B. Melkkarusselle als Außenmelker und Innenmelker, beide Arten mit beliebiger Drehrichtung. So genannte Side-By-Side-Melkstände können auch als bewegliche Melkstandanordnungen ausgebildet sein. Weiterhin sind Gruppenmelkstände auch unbeweglich, wie z.B. Fischgrätmelkstände und Tandemmelkstände. Diese Auflistung ist nur beispielhaft und nicht eingrenzend.

WO 2013/135842 A1 beschreibt einen Platzteiler einer Melkstandanordnung für mindestens einen Melkstand zum Melken von milchgebenden Tieren. Es werden verschiedene Lösungen für Armeinrichtungen angegeben.

Die vorgeschlagenen Lösungen haben sich an sich bewährt. Dennoch erfordern immer weiter steigenden Anforderungen insbesondere nach hohen Durchsatzzahlen und kontinuierlichem Betrieb bei heutigen Melkrobotern, die komplex und kostenaufwendig sind, eine gemeinsame Nutzung für mehrere Melkplätze. Dies kann sich nachteilig auswirken, u.a. aufgrund hoher Komplexität und damit verbundener hoher Ausfallwahrscheinlichkeit, diskontinuierlicher Betrieb, gesperrte Bereiche für das Personal (Sicherheit im Roboterbereich). Insbesondere schlagen sich erhöhte Forderungen nach Wiederholgenauigkeit und Präzision in den Kosten nieder.

Vor diesem Hintergrund besteht die Aufgabe der Erfindung darin, eine verbesserte Armeinrichtung für einen Melkstand bereitzustellen und den möglichen Anlagendurchsatz zu verbessern.

Diese Aufgabe wird durch eine Armeinrichtung mit den Merkmalen des Anspruchs 1 gelöst. Die Aufgabe wird auch durch einen Platzteiler mit den Merkmalen des Anspruchs 13 sowie durch eine Melkstandanordnung mit den Merkmalen des Anspruchs 14 gelöst.

Eine erfindungsgemäße Armeinrichtung für eine Melkstandanordnung zum automatischen Melken von milchgebenden Tieren, umfasst einen Arm und einen damit verschwenkbar gekoppelten Halter mit einem Melkzeug, wobei der Arm mit einer Armantriebswelle verbunden und um eine Armachse drehbar gelagert ist, wobei in der Armantriebswelle eine Halterantriebswelle unabhängig von der Armantriebswelle drehbar gelagert ist, wobei die Armantriebswelle und die Halterantriebswelle mit einer Antriebseinheit koppelbar ausgebildet sind, wobei die Armeinrichtung mindestens ein Übertragungselement als Zugmittel zur Übertragung von Dreh- bzw. Schwenkbewegungen aufweist. Das mindestens eine Übertragungselement ist mit jeweiligen Rädern, mit welchen es zur Übertragung von Dreh- bzw. Schwenkbewegungen in Zusammenwirkung steht, jeweils fest verbunden. Die Armeinrichtung zeichnet sich dadurch aus, dass das mindestens eine Übertragungselement aus einem metallischen Band ausgebildet ist.

Mittels dieses Übertragungselementes ist eine Übertragung von Schwenkbewegungen jeweils zwischen einem Rad eines Antriebs und einem Rad ein Abtrieb vorteilhaft spielfrei ermöglicht. Da nur Schwenkbewegungen (bis maximal 180°) auftreten, ist eine Befestigung des Übertragungselementes an einem jeweiligen Rad möglich.

Das Übertragungselement aus einem metallischen Band bietet gegenüber den verwendeten Zugmitteln aus dem Stand der Technik besondere Vorteile, wie beispielsweise eine quasi konstante Beschleunigung und Geschwindigkeit bei Dreh- bzw. Schwenkvorgängen. So treten die für Ketten typischen Polygonaleffekte nicht auf. Weiterhin sind Walkarbeit und andere Probleme von Riemen, Zahnriemen etc. nicht vorhanden.

In einer Ausführung ist das mindestens eine Übertragungselement ein Federstahlband. Es kann zum Beispiel ein Edelstahlband sein, wobei der Werkstoff 1.410 möglich ist. Dieser Edelstahl ist außerdem rostbeständig und ist daher in dem Einsatzbereich gerade unterhalb der Tiere von Vorteil.

Zudem sind die Herstellungskosten für ein solches Übertragungselement niedrig, es können hohe Kräfte übertragen werden.

Außerdem kann das metallische Material des Übertragungselementes nachbehandelt werden, wobei beispielsweise ein "Anlassen" eine Verschleißfestigkeit des Übertragungselementes vorteilhaft erhöhen kann.

Hierbei können die Umschlingungsabschnitte des Übertragungselementes um die Antriebs-/Abtriebsräder herum eine Biegeelastizität mit Biegemittelpunkt in der Achse des jeweiligen Antriebs-/Abtriebsrads aufweisen, wobei eine solche Elastizität nicht in Zugrichtung des Übertragungselementes vorhanden ist.

In einer anderen Ausführung wirkt das mindestens eine Übertragungselement mit Rollen zusammen. Es ergibt sich eine besondere Leichtgängigkeit der Armeinrichtung verbunden mit geringem Verschleiß, insbesondere aufgrund geringer Lagerkräfte der Räder und/oder Rollen.

Weiterhin ist vorgesehen, dass die Räder und/oder Rollen jeweils einen Außendurchmesser aufweisen, der größer als ein minimaler Biegeradius des mindestens einen Übertragungselementes ist. Auf diese Weise bleibt der Werkstoff des Übertragungselementes im elastischen Bereich und wird nicht verformt. Es ergibt sich zudem eine vorteilhafte Steuerbarkeit, da im Betrieb z.B. keine bleibenden Verformungen auftreten.

So kann in einer Ausführung das mindestens eine Übertragungselement eine Breite aufweisen, welche einem Außendurchmesser der Räder und/oder Rollen entspricht.

Es sind keine hohen Toleranzen erforderlich, welche eine schlechte Regelbarkeit bewirken können. Außerdem ergibt die Spielfreiheit des Übertragungselementes kein oder nur sehr geringes Spiel am Melk- bzw. Zitzenbecher.

In einer noch weiteren Ausführung sind die Räder und/oder Rollen mit Öffnungen und/oder Umlaufnuten zur Schmutzabführung versehen sind. So wird ein Selbstreinigungseffekt mit einfachen Maßnahmen erzielt. Außerdem ergibt sich ein Gewichtsvorteil.

In einer anderen Ausführung sind mindestens eine der Rollen als Führungsrolle zur Führung des mindestens einen Übertragungselementes und mindestens eine der Rollen als Andruckrolle zur Vorspannung des mindestens einen Übertragungselementes ausgebildet. Aufgrund des Federstahlwerkstoffs des Übertragungselementes sind nur geringe Vorspannungen notwendig. Eine Führung vereinfacht sich auf einfache Rollen. Diese Rollen können auch gleichzeitig zur Schmutzabführung dienen.

In einer weiteren Ausführung ist das mindestens eine Übertragungselement mit den jeweiligen Rädern, mit welchen es zur Übertragung von Dreh- bzw. Schwenkbewegungen zusammenwirkt, jeweils mittels einer Befestigungseinrichtung fest verbunden. Da nur Schwenkbewegungen (bis maximal 180°) auftreten, sind Schwenkbegrenzungen durch zusätzlich Begrenzungen/Anschläge erforderlich. Diese Begrenzungen/Anschläge lassen sich mit der Befestigungseinrichtung als weitere Funktion auf einfache Weise realisieren, wobei z.B. ein Abschnitt oder/und ein Bestandteil der Befestigungseinrichtung mit einem ortsfesten Teil oder/und Vorsprung eines Gehäuses zusammenwirken kann.

In einer Ausführung ist vorgesehen, dass die Befestigungseinrichtung mindestens ein Befestigungselement und mindestens einen Nutenstein umfasst. Dadurch ist eine einfache, wirksame und leicht austauschbare Verbindung möglich. Dieser Nutenstein kann z.B. zum Einen die Funktion einer Befestigung des Übertragungselementes an dem jeweiligen Rad und zum Anderen eine Schwenkbegrenzung in Zusammenwirkung mit einem ortsfesten Anschlag bilden. Natürlich ist es auch möglich, dass ein zusätzliches Bauteil, wie z.B. eine Schraube oder ein Bolzen für eine Schwenkbegrenzung an dem Nutenstein befestigt ist.

Zusätzlich ist hierbei vorgesehen, dass das mindestens eine Befestigungselement der Befestigungseinrichtung mindestens einen Zentrierabschnitt aufweist, welcher mit mindestens einer Befestigungsöffnung des mindestens einen Übertragungselementes in Zugrichtung des mindestens einen Übertragungselementes im Wesentlichen spielfrei zusammenwirkt. Auf diese Weise kann mit handelsüblichen Passschrauben eine vorteilhafte Spielfreiheit hierbei einfach erzielt werden.

Außerdem ist vorgesehen, dass die mindestens eine Befestigungsöffnung des mindestens einen Übertragungselementes in einer Richtung parallel zu einer Achse des jeweiligen Rades eine Länge mit einer groben Toleranz aufweist. So kann eine Montage und ein Austausch erleichtert werden.

In einer weiteren Ausführung ist an dem Arm oder in dem Arm mindestens ein Übertragungselement zur Übertragung von Dreh- bzw. Schwenkbewegungen auf den Halter angeordnet. Dadurch wird das Gewicht des Arms reduziert und die Vorteile des als Federstahlbands ausgebildeten Übertragungselementes können voll ausgenutzt werden.

In einer noch weiteren Ausführung sind an dem Arm oder in dem Arm mindestens eine Führungsrolle zur Führung des mindestens einen Übertragungselementes und mindestens eine Andruckrolle zur Vorspannung des mindestens einen Übertragungselementes vorgesehen.

In einer anderen Ausführung weist der Arm ein Gehäuse weist, welches ein- oder mehrteilig ausgeführt ist. Dadurch wird ein zusätzlicher Schutz vor Schmutz ermöglicht. Außerdem ergibt sich eine kompakte Einheit

In einer noch anderen Ausführung ist vorgesehen, dass an dem Arm oder in dem Arm mindestens eine Montageöffnung eingeformt ist. Ein solche Montageöffnung bietet den Vorteil, dass durch diese z.B. die Befestigungseinrichtungen der Übertragungselemente leicht und schnell erreicht werden können.

Es ist vorgesehen, dass die der Armeinrichtung zuzuordnende Antriebseinheit einen Armantrieb zum Antrieb des Arms, einen Halterantrieb zum Antrieb des Halters und einen Vertikalantrieb zur vertikalen Verstellung der Armeinrichtung aufweist, wobei der Armantrieb und der Halterantrieb in einem Rahmen angebracht sind. Da die Motoren nicht in den Gelenken angeordnet sind, befinden sich die Motoren nicht im Schmutz- und Nassbereich und können somit geringere Schutzarten aufweisen. Außerdem erhöhen Motoren in den Gelenken die bewegten Massen, was eine schlechtere Regelbarkeit bedeutet, die hier jedoch nicht mehr vorhanden ist.

Hierbei kann eine Spanneinrichtung zur Spannung des mindestens einen Übertragungselementes durch Verschiebung des Armantriebs vorgesehen sein. Natürlich ist anstelle dessen oder zusätzlich auch eine Andruckrolle (oder auch mehrere) zur Vorspannung einsetzbar.

In einer weiteren Ausführung bilden der Armantrieb, der Halterantrieb und der Vertikalantrieb der Antriebseinheit einschließlich dazugehöriger Getriebe und einer Lagereinheit der Armantriebswelle und der Halterantriebswelle in dem Rahmen eine gemeinsame Basis der Armeinrichtung. Daraus ergibt sich der besondere Vorteil, dass das Gewicht von Arm und Halter im Gegensatz zu Armeinrichtungen mit integrierten Motoren und Getrieben wesentlich verringert ist. Im Betrieb üben der Arm und der Halter lediglich nur eine vorteilhaft geringe kinetische Energie in x-y-Ebenen (in z-Richtung erfolgen nur langsame Bewegungen mit geringerer Genauigkeit) aus. Dies wiederum ergibt den Vorteil, dass ein Melker und die automatische Armeinrichtung mit dem Melkzeug bei einem Melkvorgang (Positionieren, Ansetzen, Melken, evtl. Wiederansetzen, Abnehmen) gleichzeitig an dem zu melkenden Tier arbeiten können. Ein besonderer Schutzraum ist somit nicht erforderlich. Zudem besteht ein Vorteil darin, dass sich eine Ansteuerung der Armeinheit in x-y-Ebenen vereinfacht, da die Armeinheit aufgrund der verringerten Trägheit bedeutend weniger Nachlauf aufweist und geringere Beschleunigungskräfte benötigt.

In einer weiteren Ausführung sind der Arm und der Halter der Armeinrichtung unabhängig voneinander verschwenkbar. Dadurch ergibt sich eine einfache Regelbarkeit der Stellungen von Arm und Halter.

Ein erfindungsgemäßer Platzteiler einer Melkstandanordnung für mindestens einen Melkstand zum Melken von milchgebenden Tieren ist bereitgestellt, wobei der Platzteiler an einer Längsseite des Melkstands angeordnet ist. Der Platzteiler weist eine Antriebseinheit und eine mit dieser gekoppelte Armeinrichtung auf, welche einen Arm und einen damit verschwenkbar gekoppelten Halter mit einem Melkzeug umfasst und welche aus einer Parkposition in eine Arbeitsposition und zurück verstellbar ist, wobei die Armeinrichtung mit dem Melkzeug in der Parkposition in dem Platzteiler angeordnet ist und seitlich zu einem zu melkenden Tier zwischen dessen Vorder- und Hinterbeine in die Arbeitsposition verstellbar ist. Die Armeinrichtung ist die oben beschriebene Armeinrichtung.

In einer bevorzugten Ausführung bilden der Armantrieb, der Halterantrieb und der Vertikalantrieb der Antriebseinheit einschließlich dazugehöriger Getriebe und einer Lagereinheit der Armantriebswelle und der Halterantriebswelle in dem Rahmen eine gemeinsame Basis der Armeinrichtung und sind in einem Mittelabschnitt des Platzteilers angeordnet. Dies ergibt einen vorteilhaft kompakten Aufbau.

Bei einer Melkstandanordnung mit nebeneinander angeordneten rechtwinkligen Melkständen, die jeweils parallele Längsseiten aufweisen, wie es z.B. bei einer Side-By-Side-Anordnung der Fall ist, ist der Platzteiler parallel zu einer gedachten Längsachse des zu melkenden Tieres angeordnet. Dabei wird vereinfacht angenommen, dass das zu melkende Tier mit seiner gedachten Längsachse während des Melkvorgangs in einem Idealzustand still steht.

Im Falle einer Melkstandanordnung mit kreisförmig angeordneten Melkständen wie bei einem Melkkarussell sind die Längsseiten der Melkstände nicht parallel. In diesem Fall sind die Längsseiten Abschnitte von Radien eines Kreises des Melkkarussells und schneiden sich in gedachter Verlängerung im Mittelpunkt dieses Kreises bzw. im Drehpunkt des Melkkarussells, wobei sie einen Mittelpunktswinkel bilden. Die gedachte Längsachse des zu melkenden Tiers verläuft im Idealfall auch durch den Drehpunkt und halbiert den Mittelpunktswinkel. Dieser Fall ist im weiteren Verlauf hier mit dem Begriff "annähernd parallel" abgekürzt.

Ein zu melkendes Tier kann in den mit dem Platzteiler versehenen Melkstand eintreten, ohne mit der Armeinrichtung in Berührung zu kommen. Erst wenn das Tier in dem Melkstand steht, wird das Melkzeug von der Seite her in die Arbeitsposition unter das Tier verstellt. Dazu kann es notwendig sein, dass der gesamte Platzteiler aus einer Ruheposition heraus beim Tierwechsel in eine ideale Melkposition für das neue Tier verfahren wird, beispielsweise in Längsrichtung des Platzteilers. Der Platzteiler ist in seiner Ausführung so ausgelegt, dass kein zusätzlicher Platzbedarf entsteht. Dadurch ergibt sich der Vorteil, dass die Tiere weiterhin Bauch an Bauch stehen können. Dies hat weitere Vorteile: Zum Einen können auf diese Weise viele Tiere auf kleinstmöglichem Raum gemolken werden, wodurch Kosten für die Melkstandanordnung und auch für das zugehörigen Gebäude niedrig gehalten werden können. Zum Anderen bleiben die Laufwege für Melkpersonal und die Tiere kürzer, d.h. Zeitersparnis.

Ein weiterer Vorteil dieser kompakten Bauweise liegt darin, dass eine Nachrüstung des Platzteilers in bestehende Anlagen möglich ist, ohne Melkstände/Melkplätze zu verlieren.

Personal kann jederzeit und ohne durch Vorrichtungen, d.h. die Tragarmeinrichtung und Zubehör, behindert zu sein in den Melkvorgang eingreifen und hat leichten Zugriff. Zusätzliche Schutzvorrichtungen sind nicht erforderlich. Wenn die Melkstandanordnung ein Melkkarussell ist, kann dieses ohne Unterbrechung seine Drehung beibehalten, da das Melkpersonal z.B. von außen überall eingreifen kann. Eine Gefährdung des Melkpersonals wird erheblich reduziert.

In einer Ausführung ist die Armeinrichtung in einem Vollautomatikbetrieb von der Parkposition in der Arbeitsposition in eine Ansetzposition zum automatischen Ansetzen des Melkzeugs an die Zitzen des zu melkenden Tieres verstellbar, wobei das Melkzeug mindestens einen Positionssensor aufweist. Dabei wird das Melkzeug von der Armeinrichtung unter das Euter des zu melkenden Tieres bewegt, und die Zitzenbecher werden mithilfe des Positionssensors zur Zitzenerfassung, der Armeinrichtung und der Antriebseinheit automatisch an die Zitzen angesetzt. Dieser Betrieb wird auch als Automatikbetrieb bezeichnet.

### Jeder der Zitzenbecher kann dabei einzeln positioniert werden

Alternativ ist in einer anderen Ausführung vorgesehen, dass die Armeinrichtung in einem Halbautomatikbetrieb von der Parkposition in die Arbeitsposition verstellbar ist, wobei die Arbeitsposition eine feste Vorposition ist, die durch Anschlagmittel vorher festlegbar ist, wobei das Melkzeug in der Vorposition in einer für einen Melker günstigen Position steht. Dabei wird das Melkzeug mithilfe von einfachen mit einstellbaren Anschlägen versehenen Antriebsmitteln, z.B. Pneumatikzylinder, in eine für das Melkpersonal griffgünstige feste Vorposition unter das Euter des zu melkenden Tieres verstellt. Dann kann der hinter dem Tier stehende Melker die Zitzenbecher einfach und leicht ergreifen und sie an die Zitzen ansetzen. Sobald der erste Zitzenbecher an eine Zitze angesetzt ist, wird dies z.B. mithilfe eines pneumatischen Drucksensors erkannt und das Melkzeug aus der festen Vorposition in eine freie waagerechte Position freigegeben. In senkrechter Position verbleibt das Melkzeug wie beim automatischen Ansetzen in einer Schwebeposition. So ist gewährleistet, dass wie beim automatischen Ansetzen das Melkzeug nach dem Ansetzvorgang der Bewegung des zu melkenden Tieres folgt.

Diese Vorpositionierung des Melkzeugs mit der Armeinrichtung bei diesem so genannten semi-automatischen Melken ist so gestaltet, dass der Melker die Zitzenbecher zum Ansetzen an die Zitzen nur sehr wenig bewegen und so gut wie keine Kraft aufwenden muss. Dies spart Kraft und Zeit. Da in dieser Ausführung weder ein Positionssensor noch eine Antriebsvorrichtung zur Ansteuerung aller Zitzenpositionen erforderlich ist, sondern nur ein einfacher Antrieb, kann diese Ausführung vorteilhaft kostengünstig sein. Ein weiterer Vorteil dabei ist, dass diese semiautomatische Ausführung in die automatische Ausführung aufgerüstet werden kann. Dies ist aufgrund einer Mehrzahl gleicher Bauteile möglich.

Eine Melkstandanordnung zum Melken von milchgebenden Tieren kann mit dem oben beschriebenen Platzteiler versehen sein.

Die Melkstandanordnung kann ein Melkkarussell sein. Das Melkkarussell kann als Außenmelkkarussell ausgebildet sein.

Eine Melkstandanordnung kann als Side-by-Side, steile oder normale Fischgräten Melkstandanordnung ausgebildet sein. Dabei ist in einer Ausführung mindestens ein Platzteiler von einer Anzahl von Platzteilern in seiner Längsrichtung aus einer Melkstellung in eine Zugangsstellung und wieder zurück verstellbar, wobei ein Ende des mindestens einen Platzteilers, welches zu einer Grubenabtrennung einer Grube für Melker weist, in der Melkstellung näher an der Grubenabtrennung angeordnet ist als in der Zugangsstellung, und zwischen diesem Ende in der Zugangsstellung und der Grubenabtrennung ein Abstand für einen Zugang für zu melkende Tiere in einer Zugangsrichtung gebildet ist. Dadurch ist es möglich, dass alle Melkstände nacheinander von zu melkenden Tieren besetzt werden, ohne dass Melkstände leer bleiben. Der Abstand für den Zugang verhindert, dass die Tiere in Berührung mit der Grubenabtrennung oder mit den Enden kommen.

In einer alternativen Ausführung der Side-by-Side, steilen oder normalen Fischgräten Melkstandanordnung ist eine Anzahl Platzteiler in ihrer jeweiligen Längsrichtung aus einer Melkstellung in eine Zugangsstellung und wieder zurück verstellbar, wobei Enden der Anzahl von Platzteilern, welche zu einer Grubenabtrennung einer Grube für Melker weisen, in der Melkstellung näher an der Grubenabtrennung angeordnet sind als in der Zugangsstellung, und zwischen diesen Enden in der Zugangsstellung und der Grubenabtrennung ein Abstand für einen Zugang für zu melkende Tiere in einer Zugangsrichtung gebildet ist.

In einer weiteren Ausführung ist vorgesehen, dass die Anzahl Platzteiler separat, in Gruppen oder alle zusammen in ihrer jeweiligen Längsrichtung aus einer Melkstellung in eine Zugangsstellung und wieder zurück verstellbar sind. Damit ist es möglich einen Tierverkehr einfach und wirkungsvoll zu steuern.

In einer anderen Ausführung sind die Platzteiler so ausgebildet sind, dass sie in der Zugangsstellung erst einen Teilbereich des zugeordneten Melkstands für das jeweils zu melkende Tier freigeben, bis alle zu melkenden Tiere die Melkstände der Melkstandanordnung betreten haben, und danach den zugeordneten Melkstand vollständig freigeben. Hierbei kann der Tierverkehr leicht beeinflusst werden.

Dabei ist auch eine Durchlauferkennung möglich, wenn die Melkstandanordnung ein Durchlauferkennungssystem für die zu melkenden Tiere aufweist, welches in den Platzteilern angeordnet ist. So kann der Tierverkehr nicht nur gesteuert, sondern auch einfach überwacht werden.

Zusammengefasst bietet die erfindungsgemäße Armeinrichtung, auch zusammen mit dem erfindungsgemäßen Platzteiler und dem erfindungsgemäßen Melkstand die folgenden Vorteile.
- Sehr geringe Toleranzen, auch nach langer Laufzeit
- Keine Elementelastizitäten, insbesondere wenn sich Kuh bei angesetzten Zitzenbechern bewegt.
- Die Armeinrichtung übt lediglich geringe kinetische Energie in x-y-Ebenen aus, da in dem Armgelenk und in dem Haltergelenk keine schweren Motoren und/oder Getriebe angebaut sind.
- Durch die geringe kinetische Energie können Mensch/Melker und Roboter bei einem Melkvorgang gleichzeitig an dem zu melkenden Tier (Kuh) arbeiten. Es ist kein Schutzraum erforderlich.
- Fast keine Walkarbeit der Zugmittel/Übertragungselemente (dies ist insbesondere für Leichtgängigkeit, Handansetzen der Zitzenbecher, Nachführbarkeit eines sich bewegenden Tieres), wobei unter Walkarbeit eine Verformung des Werkstoffs des Übertragungsmittels z.B. durch mechanische Einwirkungen wie Kneten, Drücken, Ziehen zu verstehen ist.
- Unempfindlichkeit gegenüber Temperaturschwankungen
- Nur kleine zusätzliche bewegte Massen im TCP (Tool Center Point) (insbesondere bei Verwendung von Kunststoff-Umlenkrollen), dadurch ergibt sich eine bessere und schnellere Regelbarkeit
- Federstahlband ist kein Verschleißteil
- Es gibt keinen Polygonaleffekt (wie bei Kurbelstangen, Ketten, Zahnriemen), dadurch ergibt sich eine einfachere Regelbarkeit
- Keine großen Vorspannkräfte erforderlich, dadurch geringere Kräfte auf Lagerstellen
- Gewichtseinsparung durch Verwendung von Kunststoff als Werkstoff für viele Teile (Räder und Rollen)
- Im Wesentlichen Spielfreiheit, dadurch einfache Rückpositionierbarkeit des Melkzeugs bei Abstreifen/Abtreten/Herunterfallen
- Verringerte Verletzungsgefahr der zu melkenden Tiere

Vorteilhafte Weiterbildungen und Ausgestaltungen des Melkzeugs bzw. des Melkstands sind Gegenstand der jeweiligen abhängigen Ansprüche.

Weitere Vorteile und Einzelheiten gehen aus dem in den Figuren der Zeichnung dargestellten Ausführungsbeispiel hervor. Hierbei zeigen:
- Figur 1: eine schematische Draufsicht auf ein Ausführungsbeispiel einer erfindungsgemäßen Melkstandanordnung mit erfindungsgemäßen Platzteilern mit erfindungsgemäßen Armeinrichtungen;
- Figur 1a: eine schematische Draufsicht auf Melkstände nach Figur 1;
- Figur 2-2a: schematische Ansichten eines zweiten Ausführungsbeispiels der erfindungsgemäßen Melkstandanordnung mit den erfindungsgemäßen Platzteilern;
- Figur 2b: eine schematische Draufsicht einer Variante des zweiten Ausführungsbeispiels nach Figur 2-2a;
- Figur 3: eine schematische Draufsicht eines dritten Ausführungsbeispiels der erfindungsgemäßen Melkstandanordnung mit den erfindungsgemäßen Platzteilern;
- Figur 3a: eine schematische Draufsicht einer Variante des dritten Ausführungsbeispiels nach Figur 3;
- Figur 3b: eine schematische Draufsicht einer weiteren Variante des dritten Ausführungsbeispiels nach Figur 3;
- Figur 4: eine schematische Perspektivansicht des erfindungsgemäßen Platzteilers mit der erfindungsgemäßen Armeinrichtung in einer Parkposition;
- Figur 5: die Perspektivansicht nach Figur 4 mit der erfindungsgemäßen Armeinrichtung in einer Arbeitsposition;
- Figur 6: eine Perspektivansicht einer Variante des erfindungsgemäßen Platzteilers mit der erfindungsgemäßen Armeinrichtung in einer Arbeitsposition;
- Figur 7: eine vergrößerte Ansicht der erfindungsgemäßen Armeinrichtung nach Figur 6 in einer Parkposition;
- Figur 8: eine perspektivische Teilansicht der erfindungsgemäßen Armeinrichtung nach Figur 6;
- Figur 9: eine perspektivische Teilansicht von Funktionsbauteilen der erfindungsgemäßen Armeinrichtung nach Figur 8;
- Figur 10: eine Schnittansicht eines Arms der erfindungsgemäßen Armeinrichtung in einer x-y-Ebene aus Figur 8;
- Figur 11: eine schematische Schnittansicht jeweils längs der Linien XI-XI aus Figur 10;
- Figur 11a: eine schematische Ansicht eines Befestigungsabschnitts eines Übertragungselementes;
- Figur 12: eine schematische, perspektivische Darstellung eines Antriebs-/Abtriebsrads mit einem Übertragungselement;
- Figur 13: eine schematische, perspektivische Explosionsdarstellung von Funktionsbauteilen der erfindungsgemäßen Armeinrichtung nach Figur 8;
- Figur 14: eine Schnittansicht eines Haltergelenks; und
- Figur 15: eine Schnittansicht einer eingebauten Andruckrolle.

In den Figuren sind gleiche bzw. ähnliche Funktionselemente mit gleichen Bezugszeichen versehen. In einigen Figuren ist eine Vertikalrichtung z angegeben, wobei Koordinaten x, y für verschiedene Eben vorgesehen sind.

Ortsangaben wie z.B. "oben", "unten", "links", "rechts" usw. beziehen sich auf die Darstellungen der jeweiligen Figur.

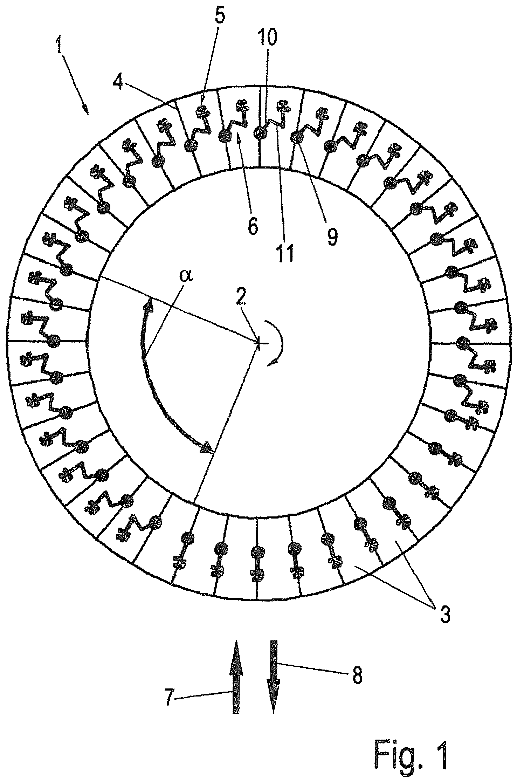

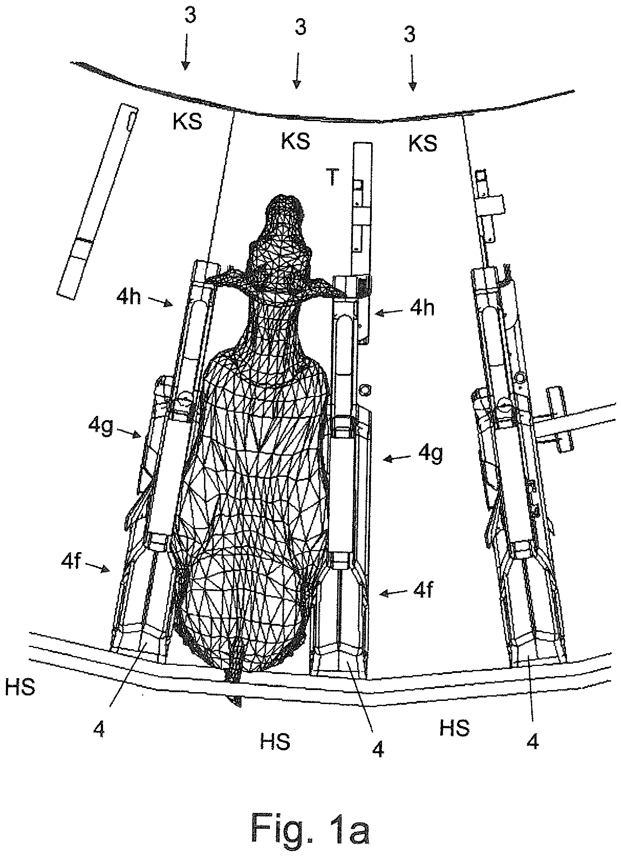

Figur 1 zeigt eine schematische Draufsicht auf ein erstes Ausführungsbeispiel einer erfindungsgemäßen Melkstandanordnung 1 mit erfindungsgemäßen Platzteilern 4 mit erfindungsgemäßen Armeinrichtungen 6. In Figur 1a ist eine schematische Draufsicht auf Melkstände nach Figur 1 dargestellt.

Die Melkstandanordnung 1 ist nach Art eines so genannten Außenmelker-Karussells aufgebaut. Dabei stehen die zu melkenden Tiere mit ihrem Kopf zu einer Mitte, d.h. einem Drehpunkt 2, ausgerichtet. Das Karussell ist hier um den Drehpunkt 2 im Uhrzeigersinn drehbar. In diesem Beispiel sind sechsunddreißig Melkstände 3 am Umfang des Karussells angeordnet und durch Platzteiler 4 getrennt. Die Platzteiler 4 werden auch z.B. als Seitengitter bezeichnet und sind annähernd parallel zur Längsachse eines zu melkenden Tieres ausgerichtet. Die Melkstandanordnung 1 wird zum maschinellen Melken von milchgebenden Tieren, z.B. Kühe, mittels Melkzeugen 5 verwendet. Für jeden Melkstand 3 ist jeweils ein Melkzeug 5 vorgesehen, welches über eine Armeinrichtung 6 aus einer Parkposition in eine Arbeitsposition unter das Euter eines zu melkenden Tieres, z.B. einer Kuh, in einem Melkstand 3 verstellbar ist. Jedes Melkzeug 5 ist innerhalb eines Platzteilers 4 angeordnet. Die Positionen werden unten noch näher erläutert.

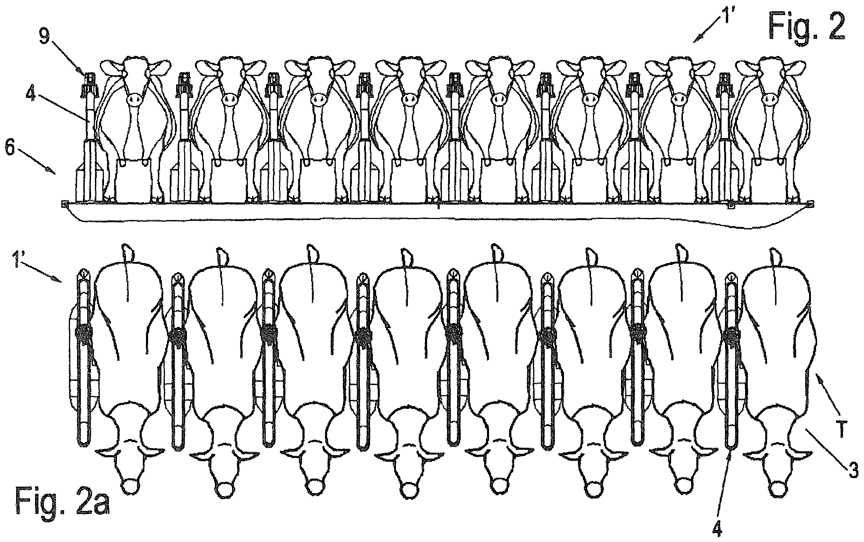

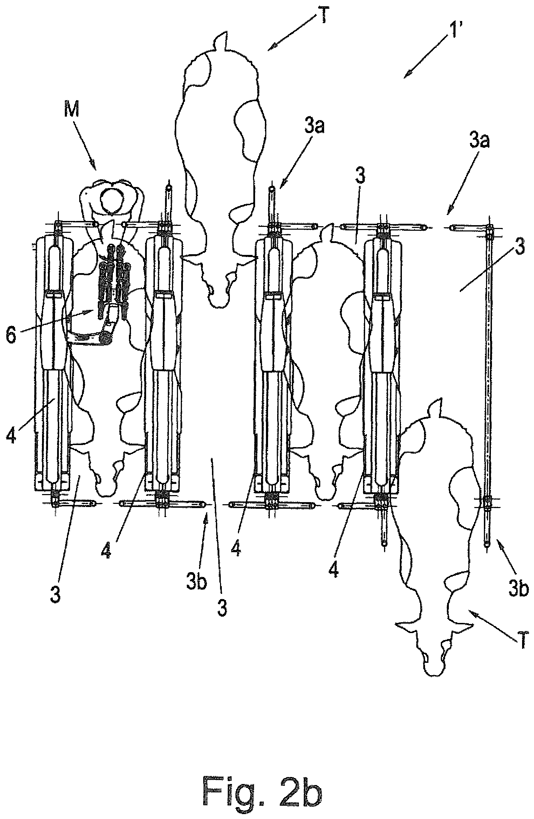

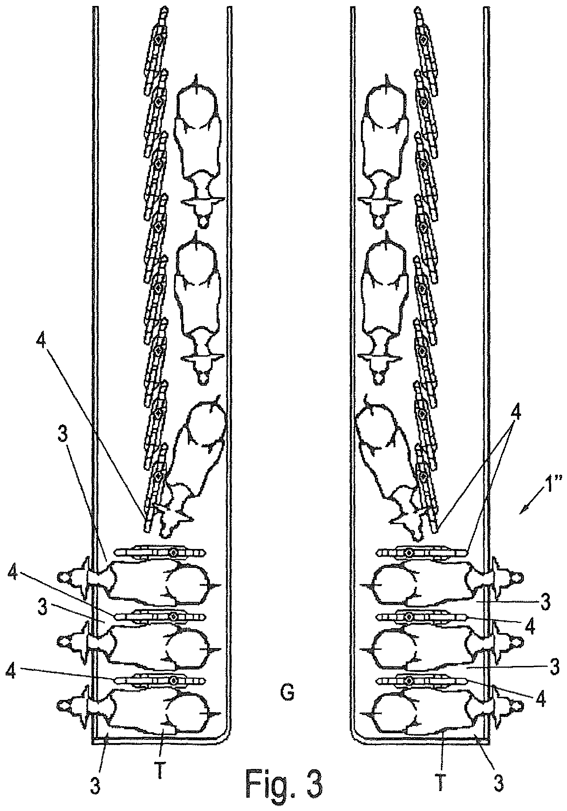

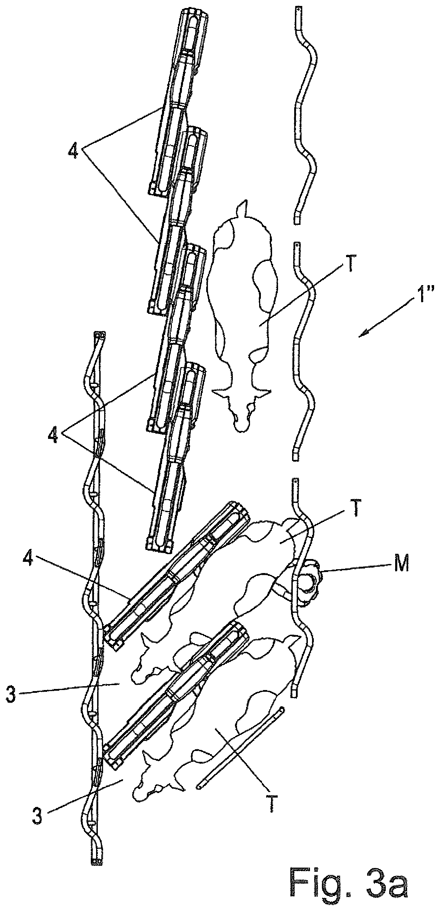

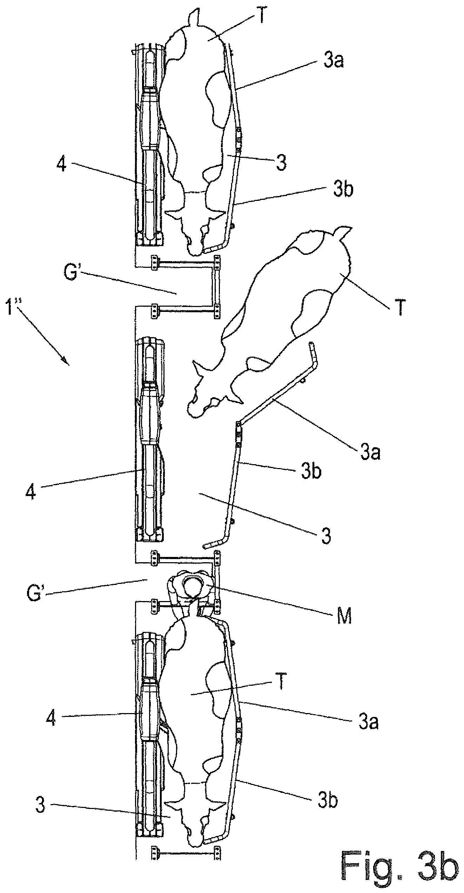

Ein Melkstand 3 weist im Allgemeinen zwei Längsseiten und zwei Schmalseiten auf. Die Längsseiten und die Schmalseiten können (z.T.) rechtwinklig zueinander angeordnet sein (siehe z.B. Figuren 2, 2a, 3) oder in Winkeln ungleich 90° (siehe z.B. Figur 1a). Das zu melkende Tier T steht zwischen den Längsseiten, sein Kopf weist zu der Schmalseite, die Kopfseite KS genannt wird, wobei die andere Schmalseite dem Hinterteil des zu melkende Tieres T zugeordnet ist und als Hinterteilseite HS bezeichnet wird.

Der Platzteiler 4 ist an mindestens einer der Längsseiten angeordnet und bildet eine seitliche Abgrenzung des Melkstandes 3.

Bei einer Melkstandanordnung 1'; 1" mit nebeneinander angeordneten rechtwinkligen Melkständen 3, die jeweils parallele Längsseiten aufweisen, wie es z.B. bei einer Side-By-Side-Anordnung der Fall ist (siehe Figuren 2, 2a, 3) ist der Platzteiler 4 parallel zu einer gedachten Längsachse des zu melkenden Tieres T angeordnet. Dabei wird vereinfacht angenommen, dass das zu melkende Tier T mit seiner gedachten Längsachse während des Melkvorgangs in einem Idealzustand still steht.

Im Falle einer Melkstandanordnung 1 mit kreisförmig angeordneten Melkständen wie bei einem Melkkarussell sind die Längsseiten der Melkstände 3 nicht parallel. In diesem Fall sind die Längsseiten Abschnitte von Radien eines Kreises des Melkkarussells und schneiden sich in gedachter Verlängerung im Mittelpunkt dieses Kreises bzw. im Drehpunkt 2 des Melkkarussells, wobei sie einen Mittelpunktswinkel bilden. Die gedachte Längsachse des zu melkenden Tiers verläuft im Idealfall auch durch den Drehpunkt und halbiert den Mittelpunktswinkel. Dieser Fall ist im weiteren Verlauf hier mit dem Begriff "annähernd parallel" abgekürzt.

Das Karussell in Figur 1 kann von den Tieren über einen Zugang 7 betreten und über einen Ausgang 8 wieder verlassen werden. Nachdem ein Tier einen Melkstand 3 betreten hat, ist es wichtig, dass das Tier eine vordefinierte Position einnimmt. Dies wird erreicht, indem die Platzteiler 4 einen eingegrenzten Melkstand 3 bilden. So werden die Längsseiten der Melkstände 3 durch die Platzteiler 4 gebildet. Die Melkstände 3 weisen jeweils die Schmalseiten KS und HS auf, die jeweils zwischen den vorderen und hinteren Enden der Längsseiten angeordnet sind. Die Platzteiler 4 beinhalten trotz ihrer kompakten Abmessungen alle Komponenten zum Predippen, Zitzenreinigen, Ansetzen des Melkzeugs 5, Melken, Abnehmen des Melkzeugs 5, Postdippen. Jeder Platzteiler 4 kann in drei Abschnitte in seiner Längsachse aufgeteilt werden, nämlich in einen Hinterteilabschnitt 4f, einen Mittelabschnitt 4g und einen Kopfabschnitt 4h. Diese Abschnitte 4f, 4g, 4h sind so im Wesentlichen den Abschnitten des zu melkenden Tieres T zugeordnet.

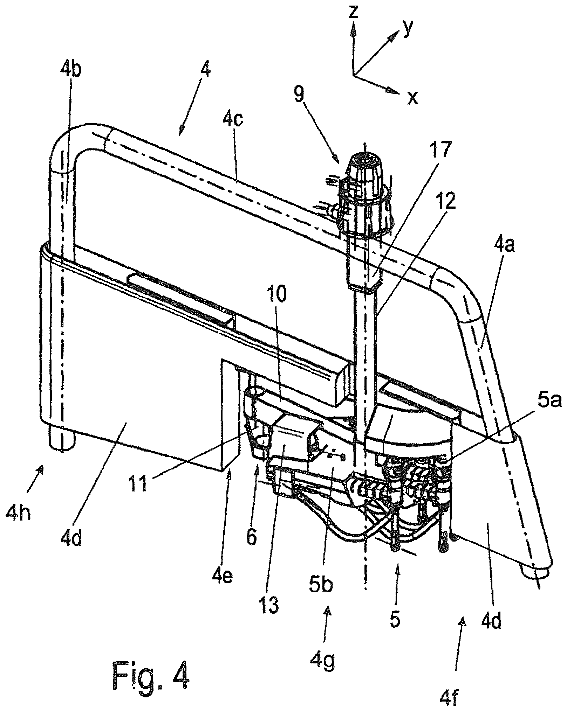

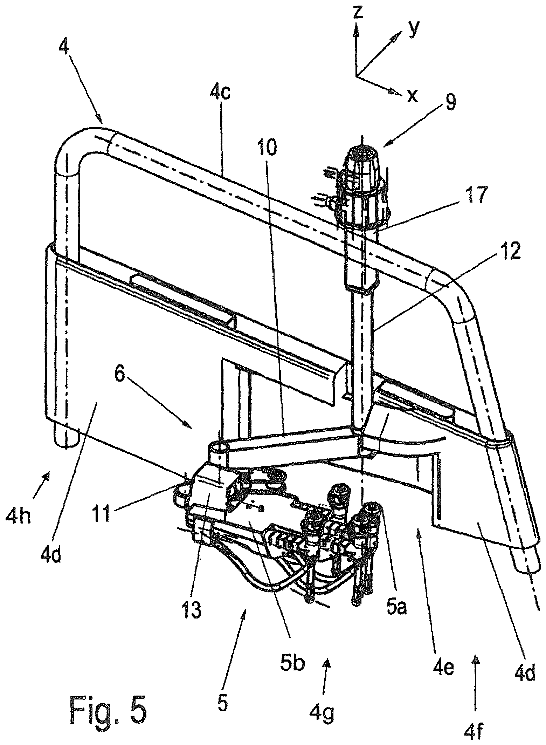

Wenn das Tier T in dem Melkstand 3 steht, wird bevorzugt innerhalb eines Kreisabschnitts, der hier als Ansetzbereich α bezeichnet ist, das Melkzeug 5 aus der Parkposition in dem Platzteiler 4 in die Arbeitsposition von der Seite des Tieres zwischen seinen Vorderbeinen und Hinterbeinen unter den Euter des Tieres verstellt und an diesen mit Hilfe eines Positionssensors 13 (siehe z.B. Figur 4, 5) angesetzt. Ein Ansetzen kann aber prinzipiell an jeder Position des Karussells erfolgen, z.B. wenn ein Melkzeug 5 wieder abgefallen ist. In dem ersten Ausführungsbeispiel ist an jedem Platzteiler 4 eine Antriebseinheit 9, die unten noch weiter erläutert wird, angeordnet, welche mit der Armeinrichtung 6 in Verbindung steht. Nach abgeschlossenem Melkvorgang wird das Melkzeug 5 von dem zu melkenden Tier mittels Armeinrichtung 6 und Antriebseinheit 9 wieder abgenommen oder fällt von selbst in eine Warteposition bzw. Melkendeposition und wird danach in die Parkposition verstellt.

Alle Melkstände 3 sind am Außenumfang der Melkstandanordnung 1 von einem Melker frei zugänglich, so dass er jederzeit bei einem Melkvorgang eingreifen kann. Dieser Arbeitsbereich ist daher von zusätzlichen Vorrichtungen freigehalten. Eine Gefährdung des Melkers ist minimiert. Das Melkkarussell kann ständig in Drehbewegung verbleiben; selbst der Innenbereich einer/eines solchen Melkanordnung/Melksystems ist für eine Überwachungsperson jederzeit ohne Gefahr für diese Person zugänglich.

Die Armeinrichtung 6 weist einen Arm 10 und einen Halter 11 auf und hat die Funktion, das Melkzeug 5 gewichtsneutral zu tragen und so leichtgängig zu sein, dass sie den Bewegungen des zu melkenden Tieres folgt.

Die Armeinrichtung 6 wird unten noch näher ausführlich beschrieben.

In Figur 2 und 2a sind schematische Ansichten eines zweiten Ausführungsbeispiels der erfindungsgemäßen Melkstandanordnung 1' mit den erfindungsgemäßen Platzteilern 4 dargestellt. Figur 2 zeigt eine Vorderansicht und Figur 2a stellt eine Draufsicht dar. Hier sind die Melkstände 3 nebeneinander angeordnet und auch durch Platzteiler 4 getrennt. In den Melkständen 3 befinden sich zu melkende Tiere T, welche hier Kühe sind. Auf jedem Platzteiler 4 ist eine Antriebseinheit 9 für jeweils eine Armeinrichtung 6 mit dem Melkzeug 5 angeordnet.

In Figur 2b ist eine schematische Draufsicht einer Variante des zweiten Ausführungsbeispiels nach Figur 2-2a gezeigt. Diese Variante wird auch als Durchtreiber-Melkstandanordnung 1′ bezeichnet. Die Melkstände 3 sind durch die Platzteiler 4 seitlich getrennt. An den schmalen Rückseiten und Vorderseiten der Melkstände 3 sind jeweils Tore 3a, 3b angeordnet, wobei die Tore 3a an den Rückseiten geöffnet sind, um einen Einlass für ein Tier T in den Melkstand 3 zu bilden (zweiter Melkstand 3 von links in Figur 2b). Das Tier T kann an der Vorderseite nicht heraustreten, da diese durch die Tore 3b verschlossen sind. Befindet sich ein Tier T vollständig im Melkstand 3, so werden die Tore 3a der Rückseite verschlossen (Erster und dritter Melkstand 3 von links in Figur 2b). Ist der Melkvorgang beendet, öffnen sich die Tore 3b der Vorderseite, und die Tiere T können den Melkstand 3 wieder verlassen, wie bei dem vierten Melkstand 3 von links in der Figur 2b dargestellt ist.

Figur 3 zeigt eine schematische Draufsicht eines dritten Ausführungsbeispiels der erfindungsgemäßen Melkstandanordnung 1" mit den erfindungsgemäßen Platzteilern 4. In diesem dritten Ausführungsbeispiel sind die Platzteiler 4 in einem U-förmigen Laufgang verschwenkbar angeordnet, wobei sie zunächst einen Gang bilden, indem sie in einer Linie verschwenkt sind und die Tiere T leiten. Im Folgenden wird der in Figur 3 rechte Laufgang beschrieben. Dies betrifft auch den linken Laufgang in spiegelbildlicher Weise. Sobald das erste Tier am Ende des U-förmigen Laufgangs angekommen ist, verschwenkt der erste Platzteiler 4 am Ende so, dass ein Melkstand 3 gebildet wird. Das Verschwenken kann entweder gesteuert über einen Drehaktuator oder automatisch durch die Bewegung des Tieres T erfolgen. Diese Vorgänge laufen ab, bis alle Tiere in der Melkstandanordnung 1" platziert sind. Auch hier ist auf jedem Platzteiler 4 eine Antriebseinheit 9 für jeweils eine Armeinrichtung 6 mit dem Melkzeug 5 angeordnet. Auch ein Andocken (was weiter unten noch im Detail erläutert wird) von Antriebseinheiten 9′, die über eine oben oder unten liegende Schiene verfahren werden, ist hier möglich.

Es sind hier zwei U-förmige Laufgänge spiegelbildlich angeordnet, welche durch eine so genannte Grube G getrennt sind. Die Grube G ist der Aufenthaltsbereich eines Melkers, der von hier beidseitig das Melkgeschehen überwachen und helfend eingreifen kann, ohne durch die Bewegung der Armeinrichtungen 6 behindert zu werden.

Eine Art Fischgrätenaufbau ist natürlich auch möglich, wobei die Melkstände 3 durch die Platzteiler 4 getrennt sind. Dies zeigt Figur 3a in einer schematischen Draufsicht einer Variante des dritten Ausführungsbeispiels nach Figur 3. In Figur 3 sind die Melkstände 3 durch die Platzteiler 4 gebildet, welche zuvor so gegeneinander geklappt sind, dass ein Gang als Einlauf gebildet ist, wobei die gegeneinander geklappten Platzteiler 4 eine durchgehende Begrenzung dieses Einlaufs bilden. Erreicht das erste Tier T das Ende der Melkstandanordnung, das durch eine nicht näher bezeichnete Begrenzung gebildet ist, die in Figur 3 rechtwinklig und in Figur 3a in einem Winkel, z.B. 45°, zur Längsachse des Einlaufs steht, so wird der erste Platzteiler 4 im Uhrzeigersinn verdreht, bis er parallel zu dieser Begrenzung verläuft und mit ihr den ersten Melkstand 3 bildet. Auf diese Weise werden alle Melkstände durch die entsprechende Verschwenkung der Platzteiler 4 nacheinander gebildet. Durch die Schrägstellung der Tiere T, d.h. ihre gedachten Längsachsen verlaufen in dem Winkel zur Längsachse des Einlaufs, sind die hinteren Bereiche der Tiere T für einen Zugriff eines Melkers M von der Seite her frei. In Figur 3a ist diese jeweils die linke Seite eines Tiers T.

Es ist bei den Melkstandanordnungen 1′ nach Figur 3 und 3a auch möglich, dass die Platzteiler 4 nicht gegeneinander geklappt sind, sondern in ihren Längsachsen verschiebbar angeordnet sind. Für eine ausführliche Beschreibung wird auf die Schrift WO 2013/135842 A1 verwiesen. Die Platzteiler 4 sind zuvor außerhalb des Bereichs der Tiere T schon in der parallelen Anordnung zu der Begrenzung (rechtwinklig oder schräg) aufgestellt. Sobald sich das erste Tier T mit seiner gedachten Längsachse neben der Begrenzung aufgestellt hat, wird der erste Platzteiler 4 in Richtung seiner Längsachse so in den Bereich der Tiere T hineingeschoben, dass er auf der anderen Seite des Tieres T steht und den Melkstand 3 bildet. Beim Verlassen der so gebildeten Melkstände 3 wird die Begrenzung geöffnet (geschwenkt oder auch in Richtung ihrer Längsachse verschoben), und das erste Tier T kann den Melkstand 3 verlassen. Dann wird die der erste Platzteiler 4 wieder in Richtung seiner Längsachse in seine Ausgangsstellung zurück geschoben, usw.

In Figur 3b ist eine schematische Draufsicht einer weiteren Variante des dritten Ausführungsbeispiels nach Figur 3 dargestellt. Diese Melkstandanordnung 1" wird auch als Tandemanordnung bezeichnet. Hier sind die Melkstände 3 hintereinander bzw. in Reihe angeordnet, wobei ihre schmalen Seiten durch die Grube G' für den Melker M beabstandet sind und jeweils Begrenzungen, z.B. Gitter, aufweisen. Die Längsseiten der Melkstände 3 werden zum Einen jeweils durch einen Platzteiler 4 und durch eine zweiteilige Begrenzung, die als Tore 3a, 3b ausgeführt sind, gebildet. Das Tor 3a des mittleren Melkstands 3 ist aufgeschwenkt, um ein Tier T in den Melkstand 3 zu lassen, wobei das Tor 3b geschlossen ist. Während des Melkvorgangs sind beide Tore 3a, 3b geschlossen. Nach dem Melken öffnet sich das zum Kopf des Tiers T weisende Tor 3b, und das Tier T kann den Melkstand 3 verlassen.

Figur 4 stellt eine schematische Perspektivansicht des erfindungsgemäßen Platzteilers 4 mit der erfindungsgemäßen Armeinrichtung 6 in der Parkposition dar. Figur 5 zeigt eine schematische Perspektivansicht des erfindungsgemäßen Platzteilers 4 mit der erfindungsgemäßen Armeinrichtung 6 in einer Arbeitsposition.

Der Platzteiler 4 ist hier als ein Gehäuse ausgebildet, in welchem die gesamte Aktorik für die Armeinrichtung 6 und das Melkzeug 5, sowie Steuerelemente und Antriebseinheiten angeordnet sind. Der Platzteiler 4 ist so eine komplette Einheit, die an gegebener Stelle vormontierbar und komplett austauschbar oder nachrüstbar ist.

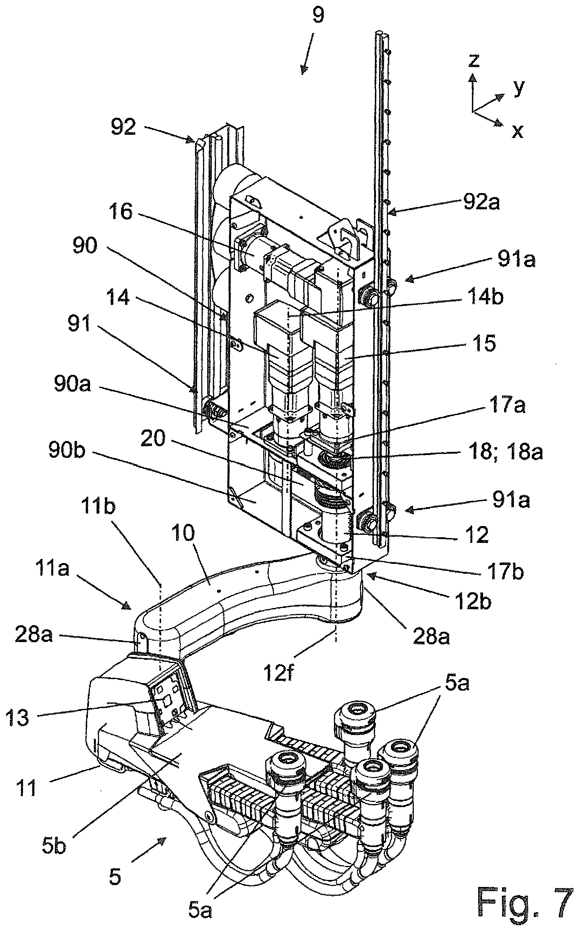

Der Platzteiler 4 ist hier als eine Rohrkonstruktion mit einem vorderen Pfosten 4a, der leicht geneigt ist, und einem hinteren Pfosten 4b. Die Pfosten 4a, 4b sind über eine horizontal verlaufende Horizontalstange 4c verbunden. Etwa ab halber Höhe sind die Pfosten 4a, 4b von einer Verkleidung 4d umhüllt, die sich etwa bis zu den Füßen der Pfosten 4a, 4b erstreckt. Die Pfosten 4a, 4b und die Horizontalstange 4c können auch einstückig aus gebogenem Rohr hergestellt sein. In der Verkleidung 4d ist in der vorderen Hälfte eine Öffnung 4e eingebracht, wodurch sich eine Aufnahme innerhalb des Platzteilers 4 in der Verkleidung 4d ergibt, die auch zu den Seiten hin so ausgebaucht sein kann (siehe z.B. Fig. 7), dass sie das in ihr geparkte Melkzeug 5 aufnimmt und umgibt. Auf der Seite der Öffnung 4e kann eine zusätzliche, nicht gezeigte Schutzabdeckung zum Schutz des Melkzeugs 5 angebracht sein. Diese Schutzabdeckung kann bei Aktivierung des Melkzeugs 5 z.B. in Richtung des Platzteilers 4 verschoben werden, um die Öffnung 4e freizugeben. In einer weiteren Ausführung kann die Schutzabdeckung auch am Melkzeug 5 angebracht sein. So verbleibt die Schutzabdeckung fest am Melkzeug 5 und verfährt auch mit diesem. Sie kann auch in der Arbeitsposition verkleinert werden, z.B. durch automatisches Zusammenklappen oder ―schieben.

Das Melkzeug 5 weist in diesem Ausführungsbeispiel vier Zitzenbecher 5a auf und ist mit einem Melkzeugträger 5b an dem Halter 11 der Armeinrichtung 6 angebracht. Jeder der vier Zitzenbecher 5a kann unabhängig von den anderen eine unterschiedliche Stellung einnehmen und automatisch fixiert oder frei beweglich geschaltet werden. Somit können die Zitzenbecher 5a im angesetzten Zustand individuelle Positionen einnehmen, da die Zitzenbecher 5a einzeln angesetzt werden. Außerdem ist eine nicht dargestellte individuelle Zitzenbechervorpositionierung denkbar, mit der dann mehrere Zitzenbecher gleichzeitig ansetzbar sind.

Das Melkzeug 5 ist außerdem mit einem Positionssensor 13 versehen, welcher hier als ein dreidimensionaler optischer Sensor ausgebildet ist. Mit dem Positionssensor 13 wird das Melkzeug 5 mittels der Armeinrichtung 6 und einer Antriebseinheit 9 aus der Parkposition in die Arbeitsposition nach Figur 5 verstellt.

Die Armeinrichtung 6 ist zusammen mit dem Melkzeug 5 scherenförmig in einer jeweiligen x-y-Ebene zusammenklappbar, wodurch die Breite des Melkzeugs 5 im unteren eingeklappten Bereich in der Parkposition, wenn das Melkzeug 5 z.B. in einer so genannten Clean(ing)-in-Place- (CIP-) Position steht, nicht wesentlich überschritten wird. In der Clean(ing)-in-Place- (CIP-) Position werden die Zitzenbecher 5a gereinigt. Weiteres kann hierzu der Schrift WO 2013/135842 A1 entnommen werden.

In der Arbeitsposition kann das Melkzeug 5 verschiedene Stellungen einnehmen. Eine Ansetzstellung dient z.B. dazu, die Zitzenbecher 5a so zu positionieren, dass sie jeweils an eine entsprechende Zitze eines zu melkenden Tieres angehängt werden können. Während des Melkvorgangs unterstützt die Armeinrichtung 6 das Melkzeug 5 derart, dass das Gewicht des Melkzeugs 5 den Melkvorgang nicht beeinträchtigt. Nach einer vollendeten Melkung werden die Zitzenbecher 5a wieder vom Euter des gemolkenen Tieres gelöst.

Die Antriebseinheit 9 dient zur Erzeugung von Drehbewegungen bzw. Schwenkbewegungen, welche in geeigneter Weise auf die Armeinrichtung 6 übertragen werden. Eine solche Drehbewegungs- bzw. Drehmomentenübertragung von Motoren bzw. Antrieben der Antriebseinheit 9 erfolgt z.B. über Getriebe mittels Zahnrädern oder/und Stangen, Zugmittel etc.

Eine Steuerung der Bewegungsvorgänge der Armeinrichtung 6 und des Melkzeugs 5 erfolgt mittels einer Steuereinrichtung, die hier nicht gezeigt ist. Die Steuereinrichtung ist mit dem Positionssensor 13 und der Antriebseinheit 9 verbunden. In diesem Ausführungsbeispiel ist die Antriebseinheit 9 auf einem oberen Ende einer Armantriebswelle 12 angebracht. Die Armantriebswelle 12 und mit ihr die Antriebseinheit 9 und die Armeinrichtung 6 mit dem Melkzeug 5 sind in einer Lagereinheit 17 auf der Horizontalstange 4c des Platzteilers 4 befestigt und rotatorisch wie auch vertikal (in z-Richtung) verstellbar geführt. Die Armantriebswelle 12 ist mit ihrem unteren Ende mit einem Ende des Arms 10 der Armeinrichtung 6 fest verbunden. An ihrem oberen Ende ist die Armwelle 12 mit einem Antrieb der Antriebseinheit 9 gekoppelt. In der als Hohlwelle ausgebildeten Armantriebswelle 12 ist eine weitere Welle zum Antrieb des Halters 11 angeordnet, die von einem weiteren Antrieb der Antriebseinheit 9 antreibbar ist.

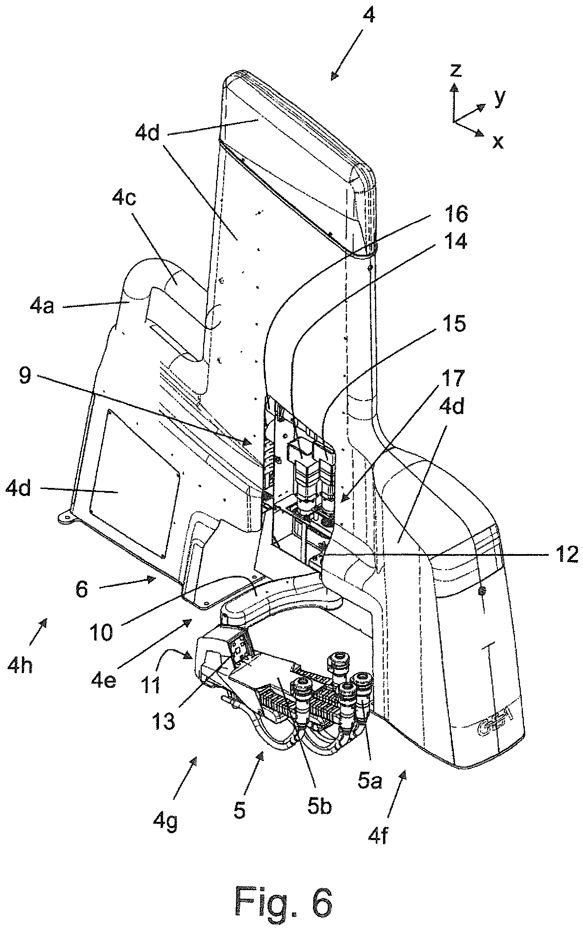

Dies wird unten noch ausführlich erläutert. Die Armantriebswelle 12 und die mit ihr verbundene Armeinrichtung 6 mit Melkzeug 5 sind durch einen Vertikalantrieb 16 (siehe Figur 6), z.B. ein Pneumatikzylinder, in Vertikalrichtung z verstellbar. Eine Verstellung des Melkzeugs 5 aus der Parkposition in die Arbeitsposition bzw. andere Positionen erfolgt durch kombinierte Bewegungsabläufe zum Einen in der Vertikalrichtung z als auch in einer jeweiligen x-y-Ebene.

Die Antriebe der Antriebseinheit 9 können in unterschiedlicher Ausführung realisiert sein, wie beispielsweise Servomotoren mit entsprechenden Getrieben, aber auch Direktantriebsmotoren sind möglich. Außerdem sind sie z.B. als so genannte Torque-Motoren ausgebildet, wodurch eine gewisse Elastizität der Armeinrichtung 6 und des Melkzeugs 5 erreicht wird. Beispielsweise können Tritte des zu melkenden Tieres abgefedert werden.

Sowohl der Arm 10 als auch der Halter 11 sind auf diese Weise unabhängig voneinander gezielt antreibbar.

Die Antriebseinheit 9 ist hier im oberen Bereich des Platzteilers 4 oberhalb eines zu melkenden Tieres außerhalb dessen Reichweite angeordnet. Das hat einerseits den Vorteil, dass die Antriebseinheit 9 im nicht trittgefährdeten Bereich liegt. Außerdem ist der obere Bereich über dem Tier besser vor Feuchtigkeit und den damit verbundenen Schäden geschützt. Weiterhin ist auch damit die besonders schmale Bauform des Platzteilers 4 möglich. Die Armeinrichtung 6 mit dem Melkzeug 5 ist im unteren Bereich des Platzteilers 4 so angeordnet, dass ein notwendiges Verschwenken der Armeinrichtung 6 mit dem Melkzeug 5 unterhalb des Bauches eines zu melkenden Tieres von der Seite her stattfinden kann. Dabei können auch die Beine des zu melkenden Tieres nicht getroffen werden.

In der Parkposition des Melkzeugs 5 und der Armeinrichtung 6 innerhalb der Verkleidung 4d des Platzteilers 4 kann das Melkzeug 5 unter eine Reinigungseinrichtung bewegt werden, welche in der Schrift WO 2013/135842 A1 beschrieben ist. Auf diese Schrift wird auch hinsichtlich einer Beschreibung eines Melkstarts verwiesen.

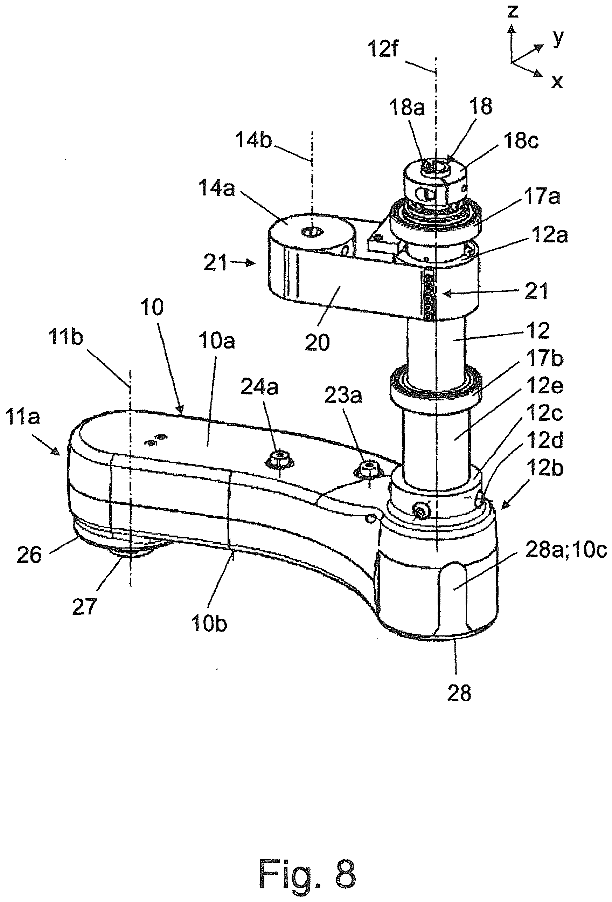

In Figur 6 ist eine Perspektivansicht einer Variante des erfindungsgemäßen Platzteilers 4 mit der erfindungsgemäßen Armeinrichtung 6 in einer Arbeitsposition gezeigt. Figur 7 zeigt dazu eine vergrößerte Ansicht der erfindungsgemäßen Armeinrichtung 6 nach Figur 6 auch in einer Arbeitsposition. Figur 8 stellt eine perspektivische Teilansicht der erfindungsgemäßen Armeinrichtung 6 nach Figur 6 dar.

In dieser Variante umfasst die Verkleidung 4d des Platzteilers 4 zwei selbsttragende Halbschalen. Dabei sind diese Halbschalen in Abschnitte 4f, 4g und 4h aufgeteilt. Die Zuordnung der Abschnitte 4f, 4g und 4h zu der Seite eines zu melkenden Tieres T ist bereits oben im Zusammenhang mit Figur 1a erläutert worden. Der Abschnitt 4f ist dem Hinterteil eines zu melkenden Tieres T zugeordnet und wird als Hinterteilabschnitt 4f benannt. Er enthält einen Aufnahmeraum für eine nicht weiter beschriebene Serviceeinheit. Für weitere Angaben dazu wird auf die WO 2013/135842 A1 verwiesen.

An den Hinterteilabschnitt 4f schließt sich ein Mittelabschnitt 4g an, welcher die Aufnahme 4e für das Melkzeug 5 mit der Armeinrichtung 6 und die zugehörigen Antriebe der Antriebseinheit 9 aufweist. Der Mittelabschnitt 4g ist der Mitte des zu melkenden Tieres T zugeordnet. Die Antriebseinheit 9 wird unten noch im Detail erläutert.

Der Kopfabschnitt 4h ist dem Kopf des zu melkenden Tieres T zugeordnet und ist mit dem Pfosten 4a verbunden, welcher an seiner Oberseite in einem Radius nach hinten gebogen ist und in die Horizontalstange 4c, die hier nach hinten unten geneigt ist, übergeht. Die Horizontalstange 4c erstreckt sich bis zu einer vorderen Stirnseite des Mittelabschnitts 4g, die sich hier nach oben erstreckt und mit der Horizontalstange 4c verbunden ist. Die Neigung der Horizontalstange 4c nach hinten setzt sich in einer Neigung der Oberseite des Hinterteilabschnitts 4f fort.

Die Antriebseinheit 9 weist einen Armantrieb 14 zur Verschwenkung des Arms 10, einen Halterantrieb 15 zur Verschwenkung des Halters 11 mit dem Melkzeug 5 und einen Vertikalantrieb 16 zur Verstellung der Armeinrichtung 6 in Vertikalrichtung z auf. Der Armantrieb 14 und der Halterantrieb 15 sind in einem in Vertikalrichtung z verstellbaren Rahmen 90 angebracht, welcher durch den Vertikalantrieb 16 verstellt werden kann. Der Rahmen 90 ist an beiden Längsseiten mit Vertikalführungslagern 91, 91a jeweils an einem Vertikalführungselement 92, 92a, z.B. einer geeigneten Profilleiste, in Vertikalrichtung z verschiebbar geführt. Die Vertikalführungslager 91, 91a und die Vertikalführungselemente 92, 92a sind nicht näher beschrieben, aber in der Figur 7 eindeutig erkennbar.

Dabei sind der Armantrieb 14 und der Halterantrieb 15 nebeneinander auf einem Tragelement 90a in dem Rahmen 90 befestigt. Der Halterantrieb 15 ist hier auf einem ersten Lager 17a der Lagereinheit 17 angebracht, wobei ein zweites Lager 17b der Lagereinheit 17 darunter auf einem weiteren Tragelement 90b des Rahmens 90 angebracht ist. Die Tragelemente 90a und 90b verlaufen in Längsrichtung des Platzteilers 4 und sind ein einem Abstand in Vertikalrichtung z parallel zueinander angeordnet. In dieser Ausführung ist das zweite Tragelement 90b ein Teil des Rahmens 90.

Die Armantriebswelle 12 ist in dem ersten Lager 17a und dem zweiten Lager 17b der Lagereinheit 17 um die Vertikalrichtung z drehbar gelagert und erstreckt sich in Vertikalrichtung z. Unterhalb des oberen Tragelementes 90a ist die Armantriebswelle 12 durch ein Übertragungselement 20 mit einem Abtrieb des Armantriebs 14 gekoppelt, was unten noch ausführlich beschrieben wird. Das untere Ende der Armantriebswelle 12 ist mit einem Ende des Arms 10 verbunden. Auch dies wird unten näher erläutert. Der Armantrieb 14 ist in Längsrichtung des Tragelementes 90a durch eine nicht näher bezeichnete Spanneinrichtung zur Spannung des Übertragungselementes 20 einstellbar.

Innerhalb der als Hohlwelle ausgebildeten Armantriebswelle 12 ist eine Halterantriebswelle 18 (siehe auch Figur 8) um die Vertikalrichtung z drehbar angeordnet, wobei die Halterantriebswelle 18 unabhängig von der Armantriebswelle 12 verdrehbar ist. Die Halterantriebswelle 18 ist oberhalb des ersten Lagers 17a mit einem Abtrieb des Halterantriebs 15 gekoppelt.

Der Arm 10 wird unten noch im Detail beschrieben. Er erstreckt in der in Figur 7 gezeigten Arbeitsposition von seinem in der Figur rechts befindlichen Ende, das als Armgelenk 12b bezeichnet und mit dem unteren Ende der Armantriebswelle 12 verbunden ist, in einer x-y-Ebene nach links (im Falle des Melkstands 3 zu dessen Kopfseite KS (Figur 1a)). Das linke Ende des Arms 10 wird als Haltergelenk 11a bezeichnet, um welches der Halter 11 mit dem Melkzeug 5 um die Vertikalrichtung z verschwenkbar ist. An beiden Enden des Arms 10 ist jeweils ein Montageöffnungsdeckel 28a vorgesehen, der unten noch beschrieben wird und von denen hier nur derjenige an dem rechten Ende des Arms 10 zu sehen ist.

Die Antriebe 14 und 15 sind in Figur 8 der Übersichtlichkeit halber nicht gezeigt, sie sind aber im Zusammenhang mit den Figuren 6 und 7 leicht vorstellbar.

Die Armantriebswelle 12 und die Halterantriebswelle 18 sind beide konzentrisch zu einer Armachse 12f angeordnet, welche hier in Vertikalrichtung z verläuft.

Das obere Ende der Armantriebswelle 12 ist in dem ersten Lager 17a verdrehbar gelagert, was in Figur 8 gut zu erkennen ist. Ein oberes Ende der Halterantriebswelle 18 ist als Antriebsende 18a bezeichnet und mit einer nicht näher erläuterten Halterkupplung 18c versehen, an welche der Abtrieb des Halterantriebs 15 verdrehfest ankoppelbar ist (siehe Figur 7).

Die Kopplung des Übertragungselementes 20 mit der Armantriebswelle 12 erfolgt über ein Armantriebsrad 12a, das auf der Armantriebswelle 12 drehfest aufgebracht ist. Weiterhin ist das Übertragungselement 20 mit dem Abtrieb des Armantriebs 14 über ein Armabtriebsrad 14a gekoppelt. Das Armabtriebsrad 14a ist um eine Armabtriebsachse 14b verdrehbar, welche parallel zu der Armachse 12f in Vertikalrichtung z verläuft.

Das Übertragungselement 20 ist hier ein Zugmittel aus einem Metallband. Es ist mit dem Armabtriebsrad 14a und dem Armantriebsrad 12a jeweils durch einen Befestigungseineinrichtung 21 gekoppelt. Die Befestigungseinrichtung 21 wird unten noch näher erläutert. Das Übertragungselement 20 umschlingt jeweils das Armabtriebsrad 14a und das Armantriebsrad 12a in einem Umschlingungswinkel von 180° und weist eine Breite, d.h. eine Ausdehnung in Vertikalrichtung z auf. Diese Breite entspricht in etwa einem Außendurchmesser des Armabtriebsrads 14a.

Die Armantriebswelle 12 ist etwa in ihrer Mitte in dem zweiten Lager 17b gelagert und erstreckt sich weiter nach unten durch eine Hülse 12e in eine Art Ring, welcher eine Armbefestigung 12e bildet, die mit dem rechten Ende des Arms 10 fest verbunden ist. Das untere Ende der Armantriebswelle 12 ist in der Armbefestigung 12e aufgenommen und hier über vier Befestigungselemente 12d am Umfang befestigt. Auf diese Weise ist der Arm 10 mittels der Armantriebswelle 12 um die Armachse 12f verschwenkbar.

Der Arm 10 weist eine Art Bananengestalt auf. Er umfasst ein Gehäuse 10a, das an der Unterseite durch einen Deckel oder ein Gehäuseunterteil 10b verschlossen ist. An dem linken Ende des Arms 10 ist das Haltergelenk 11a angeordnet, das unten noch im Zusammenhang mit Figur 8 beschrieben wird, angeordnet. Das Haltergelenk 11a ist von unten mit einer Halteplatte 26 verschlossen, durch welche sich eine Halterwelle 27 nach unten heraus erstreckt, die mit dem Halter 11 verbindbar ist.

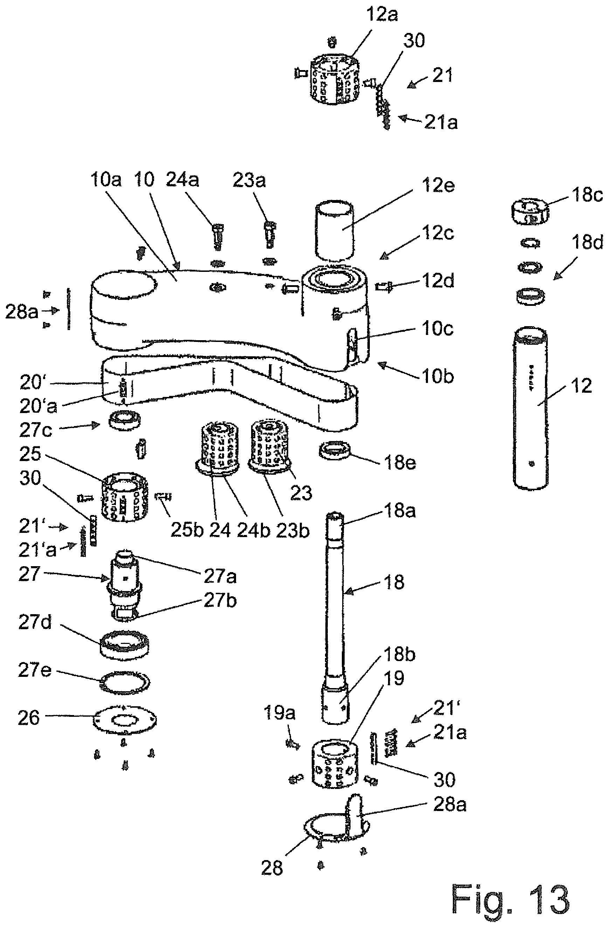

An dem rechten Ende des Arms 10, welches das Armgelenk 12b bildet, befindet sich in der Wand des Gehäuses 10a eine Art Langloch, das eine Montageöffnung 10c (am besten in Figur 13 zu erkennen) bildet und sich in Vertikalrichtung z erstreckt. Diese Montageöffnung 10c ist hier von dem Montageöffnungsdeckel 28a einer Abdeckung 28 verschlossen. Die Abdeckung 28 verschließt das Armgelenk 12b von unten her. Eine solche Montageöffnung 10c ist auch an dem anderen Ende des Arms 10 im Bereich des Haltergelenks 11a vorgesehen. Die Funktion der Montageöffnung 10c wird unten noch erläutert.

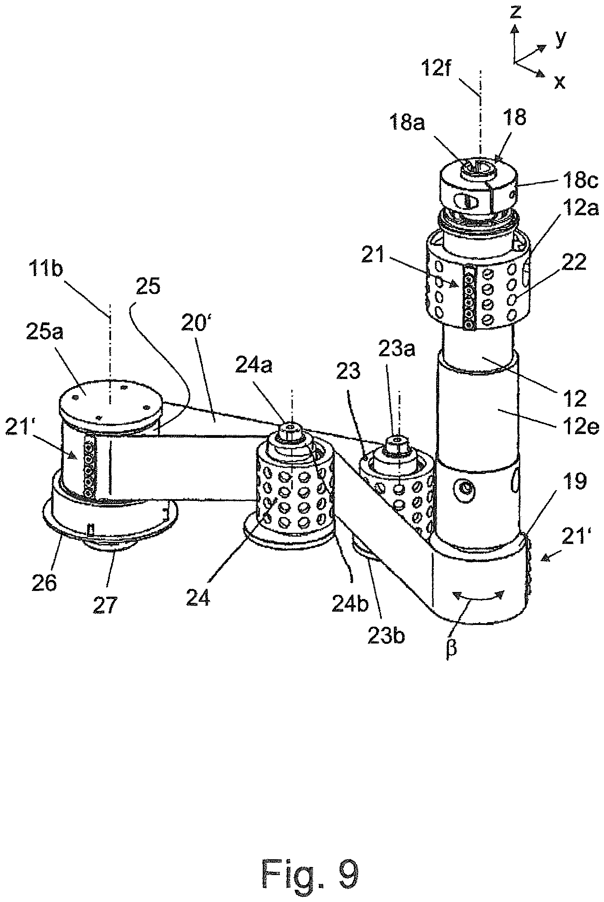

An der Oberseite des Gehäuses 10a des Arms 10 sind ein Befestigungselement 23a und ein Stellelement 24a vorgesehen, welche aus dem Gehäuse 10a herausragen bzw. durch die Wand des Gehäuses 10a an der Oberseite erreichbar sind. Ihre Funktion wird im Zusammenhang mit Figur 9 beschrieben.

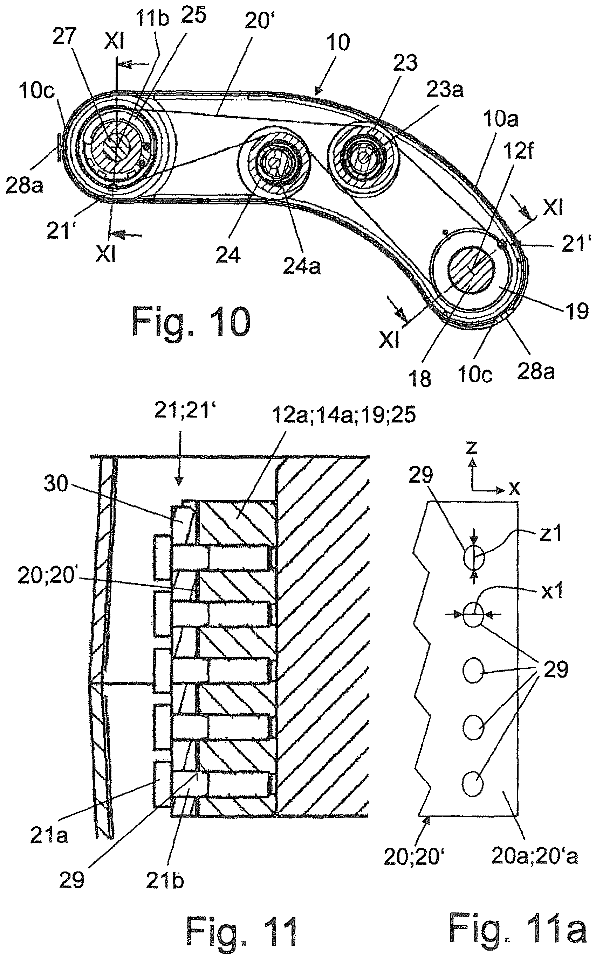

Figur 9 zeigt eine perspektivische Teilansicht von Funktionsbauteilen der erfindungsgemäßen Armeinrichtung 6 nach Figur 8. Figur 10 zeigt eine Schnittansicht des Arms 10 der erfindungsgemäßen Armeinrichtung 6 in einer x-y-Ebene aus Figur 8.

Das Übertragungselement 20 mit dem Armabtriebsrad 14a ist hier entfernt. Außerdem ist der Arm 10 mit seinem Gehäuse 10a nicht dargestellt, wodurch die Funktionselemente innerhalb des Arms 10 erkennbar sind.

Aus dem unteren Ende der Armantriebswelle 12 steht ein unteres Ende der Halterantriebswelle 18 (Abtriebsende 18b in Figur 13) hervor, auf welchem ein Halterabtriebsrad 19 drehfest aufgebracht ist. Ein weiteres Übertragungselement 20′, das ebenfalls wie das Übertragungselement 20 ein Zugmittel aus einem Metallband ist, umschlingt das Halterabtriebsrad 19 in einem Winkel von ca. 180° und ist über eine Befestigungseinrichtung 21′ mit diesem Halterabtriebsrad 19 fest verbunden.

Das Übertragungselement 20′ steht in seinem weiteren Verlauf innerhalb des hier nicht gezeigten Gehäuses 10a des Arms 10 an dessen Form angepasst mit einer Führungsrolle 23 und einer Andruckrolle 24 in Kontakt und umschlingt an der linken Seite, welche dem Haltergelenk 11a des Arms 10 entspricht, ein Halterantriebsrad 25 in einem Umschlingungswinkel von mehr als 180°. Das Übertragungselement 20′ ist an dem Halterantriebsrad 25 ebenfalls mit einer Befestigungseinrichtung 21′ wie an dem Halterabtriebsrad 19 befestigt.

Das Halterantriebsrad 25 ist mit der Halterwelle 27 drehfest gekoppelt und mit diesem um eine Halterachse 11b verdrehbar bzw. verschwenkbar. Das Halterantriebsrad 25 ist mit der Halterwelle 27 in einer nicht gezeigten Lagerung drehbar gelagert und mit der Halteplatte 26 verbunden. Außerdem ist eine Art Deckel 25a auf dem Halterantriebsrad 25 vorgesehen, welcher eine weitere Lagerung für die Halterwelle 27 bildet.

Die Führungsrolle 23 ist über das Befestigungselement 23a mit nicht gezeigter Lagerung auf einer Platte 23b befestigt, von der Unterseite des Gehäuses 10a in den Arm 10 einsetzbar und von der Oberseite her erreichbar, z.B. befestigbar. In ähnlicher Weise ist die Andruckrolle 24 einbaubar, wobei das Stellelement 24a exzentrisch ausgebildet ist, um eine Möglichkeit für eine Vorspannung des Übertragungselementes 20' durch Verdrehen des Stellelementes 24a zu bilden.

In Figur 9 ist deutlich zu erkennen, dass das Armantriebsrad 12a, die Führungsrolle 23 und die Andruckrolle 24 Öffnungen 22 aufweisen, die einerseits der Gewichtsersparnis dienen und andererseits eine Verschmutzung des jeweiligen Übertragungselementes 20, 20′ verhindern. Eventueller Schmutz wird durch die Öffnungen 22 zur Innenseite des jeweiligen Rades bzw. der jeweiligen Rolle hin und somit nach außen befördert.

Aufgrund der Befestigung der Übertragungselemente 20, 20′ mittels der Befestigungseinrichtungen 21, 21′ an den zugehörigen Rädern 14a, 12a, 19, 25 ist eine Verschwenkung um einen Schwenkwinkel β von maximal 180° möglich, wobei gleichzeitig dadurch ein Anschlag gebildet ist. Der Schwenkwinkel β liegt beispielsweise im Bereich von 160°...165°.

In Figur 10 ist die Anordnung des Übertragungselementes 20' mit den Rädern 19 und 25 sowie den Rollen 23 und 24 in einer Schnittansicht in einer x-y-Ebene dargestellt. Zudem sind die Montageöffnungen 10c an den Enden des Gehäuses 10a des Arms 10 mit den Montageöffnungsdeckeln 28a zu erkennen. Die Führungsrolle 23 und die Andruckrolle 24 sind in Längsrichtung des Arms 10 so versetzt angeordnet, dass trotz der schmalen Ausführung des Gehäuses 10a genügend Raum für beide Rollen 23 und 24 einschließlich eines Raums zum Spannen des Übertragungselementes 20' vorhanden ist.

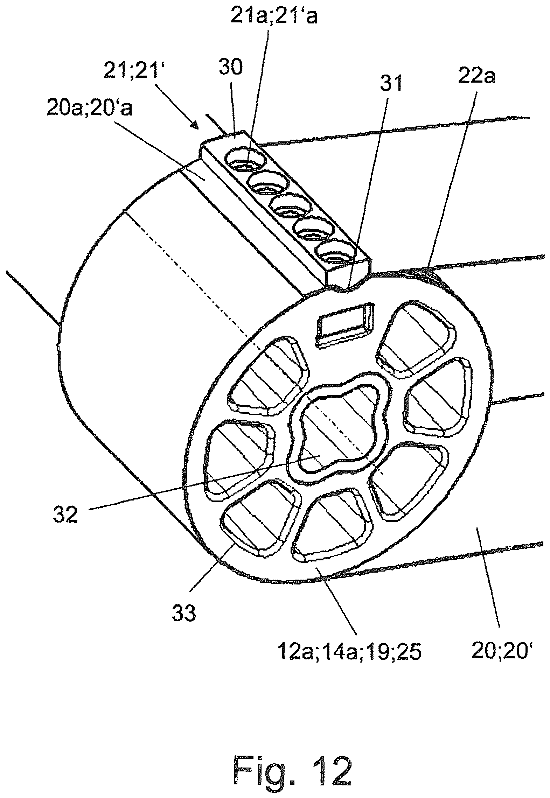

Anhand der Schnittlinien XI-XI ist in Figur 11 eine schematische Schnittansicht aus Figur 10 zur weiteren Erläuterung der Befestigungseinrichtungen 21, 21′ dargestellt. Figur 11a zeigt eine schematische Ansicht eines Befestigungsabschnitts 20a, 20′a eines Übertragungselementes 20, 20′. In Figur 12 ist eine schematische, perspektivische Darstellung eines Antriebs-/Abtriebsrads mit einem Übertragungselement 20, 20' dargestellt.

Die Befestigungseinrichtung 21, 21′ umfasst Befestigungselemente 21a, 21′a, z.B. so genannte Passschrauben (DIN 609) mit Gewinde und Zentrierabschnitten 21b, und mindestens einen Nutenstein 30. Die Befestigungselemente 21a, 21′a sind in Vertikalrichtung z parallel zu der jeweiligen Dreh-/Schwenkachse des zugehörigen Rades 12a, 14a, 19, 25 angeordnet und erstrecken sich radial zu dem jeweiligen Rad 12a, 14a, 19, 25 von außen durch einen Nutenstein 30 mit Öffnungen durch jeweilige Befestigungsöffnungen 29 von Befestigungsabschnitten 20a, 20′a der jeweiligen Übertragungselementes 20, 20′ hindurch in einen Gewindelöcher des jeweiligen Rades 12a, 14a, 19, 25.

Hierbei sind die Befestigungsöffnungen 29 in dem jeweiligen Befestigungsabschnitt 20a, 20′a des zugehörigen Übertragungselementes 20, 20′ derart ausgebildet, dass sie in z-Richtung eine Art Langloch mit der Länge z1 bilden, wobei sie in x-Richtung bzw. Umfangsrichtung ein engtoleriertes Maß x1 aufweisen. Auf diese Weise wirken die Befestigungsöffnungen 29 in x-Richtung, d.h. in Zugrichtung, jeweils mit Zentrierabschnitten 21b der Befestigungselemente 21a zusammen. Dadurch ergibt sich eine spielfreie Drehmoment- bzw. Drehwinkelübertragung.

Der Nutenstein 30 ist parallel zu der Achse des jeweiligen Rades 12a, 14a, 19, 25 angeordnet. Zudem kann das jeweilige Rad 12a, 14a, 19, 25 eine Axialnut 31 (siehe Figur 12) aufweisen, deren Querschnitt (z.B. trapezförmig) mit dem Querschnitt des Nutensteins 30 korrespondiert. Unter dem Nutenstein 30 sind an einem Rad der Räder 12a, 14a, 19, 25 zwei Enden des jeweiligen Übertragungselementes 20, 20′ mit ihren Befestigungsabschnitten 20a, 20′a befestigt, wohingegen an dem damit gekoppelten, gegenüberliegenden anderen Rad 12a, 14a, 19, 25 nur ein Befestigungsabschnitt 20a, 20′a befestigt ist.

Es ist natürlich auch denkbar, dass die Befestigungsabschnitte 20a, 20′a nicht parallel zu der Achse des jeweiligen Rades 12a, 14a, 19, 25 ausgebildet sind, sondern z.B. schräg, wobei der Nutenstein 30 entsprechend angeordnet sein kann. Auch andere Formen der Befestigungsabschnitte 20a, 20′a sind möglich, wie z.B. Verzahnungen, auch mit gerundeten Zähnen.

In Figur 12 ist außerdem eine Variante der Räder 12a, 14a, 19, 25 bzw. Rollen 23, 24 dargestellt, wobei das Rad dieser Variante Umlaufnuten 22a aufweist, die in Axialrichtung angeordnet sind. Die Umlaufnuten 22a dienen wie die Öffnungen 22 dazu, dass auftretender Schmutz ins Innere der Räder 12a, 14a, 19, 25 bzw. Rollen 23, 24 abgeführt wird und dann an der unteren Stirnseite herausgedrückt wird. Auf diese Weise ist ein Schmutzauftrag zwischen den Rädern 12a, 14a, 19, 25 bzw. Rollen 23, 24 und dem jeweiligen Übertragungselement 20, 20" nahezu ausgeschlossen. Natürlich ist es auch möglich, dass die Räder 12a, 14a, 19, 25 bzw. Rollen 23, 24 weder Umlaufnuten 22a noch Öffnungen 22 aufweisen können.

Das in Figur 12 gezeigte Rad 12a, 14a, 19, 25 ist mit einem Profil als Achsenaufnahme ausgestattet, wodurch eine einfache drehfeste Montage möglich ist. Andere Profile sind natürlich möglich. Weiterhin weist das Rad 12a, 14a, 19, 25 der Variante nach Figur 12 Öffnungen 33 auf, welche sich parallel zur Achse des Rades 12a, 14a, 19, 25 hindurch erstrecken und einerseits zur Gewichtseinsparung wie auch andererseits zur Schmutzabführung dienen.

Figur 13 stellt schließlich eine schematische, perspektivische Explosionsdarstellung von Funktionsbauteilen der erfindungsgemäßen Armeinrichtung 6 nach Figur 8 dar.

Der Figur 13 ist auch der Zusammenbau der einzelnen Funktionsbauteile zu entnehmen. So werden z.B. das Befestigungselement 23a und das Stellelement 24a von der Oberseite des Arms 10 eingeführt, wohingegen die zugehörigen Rollen 23, 24 von unten eingebaut werden.

Die Räder 12a, 19 und 25 werden jeweils mit Befestigungselementen (z.B. 19a, 25b) auf den jeweiligen Wellen drehfest befestigt.

Der Arm 10 kann z.B. ein Guss- oder auch ein Schweißteil sein. Auch ein geteiltes Gehäuse 10a ist möglich. Die Montageöffnung 10c ist hier deutlich zu sehen.

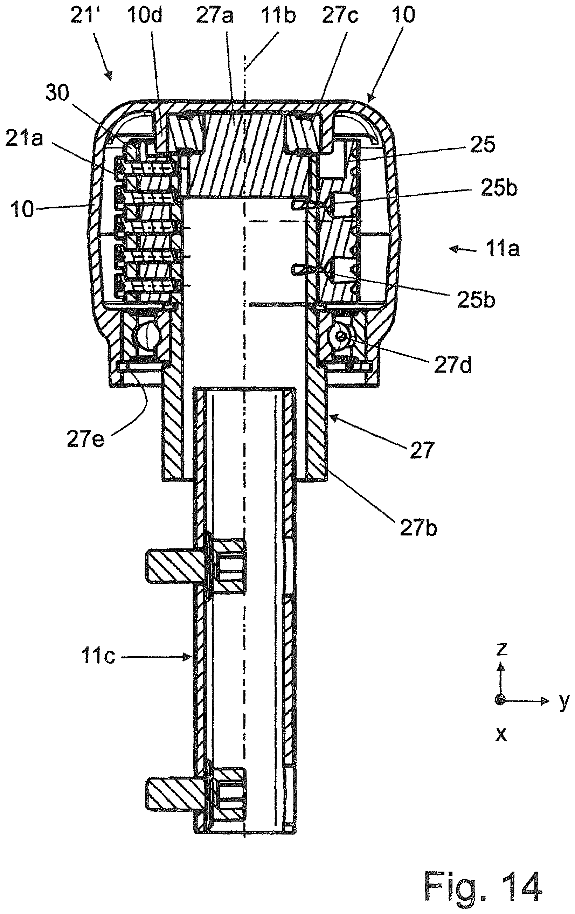

Die Halterwelle 27 ist mit einem Antriebsende 27a in einem Lager 27c gelagert. Ein Abtriebsende 27b geht durch ein weiteres, unteres Lager 27d hindurch, wobei das Lager 27d auf einem dafür ausgebildeten, nicht näher bezeichneten Abschnitt der Halterwelle 27 aufgebracht wird. Die Halterwelle 27 wird mit dem Lager 27c voran in dem Arm 10 eingesetzt, wobei sie mit einem Sicherungsring 27e in einer Bohrung des Arms 10 axial festgesetzt wird. Der Sicherungsring 27e wirkt dabei mit dem Außenring des unteren Lagers 27d zusammen. Dies ist unten noch näher mit Bezug auf Figur 14 weiter erläutert.

Mittels der Montageöffnungen 10c ist es möglich, die jeweiligen Befestigungseinrichtungen 21′ zu erreichen.

Die Außendurchmesser der Räder 12a, 14a, 19, 25 werden so dimensioniert, dass das jeweilige Übertragungselement 20, 20′ im elastischen Bereich bleibt. Mit anderen Worten, die zugehörigen minimalen Biegeradien des jeweiligen Werkstoffs der Übertragungselemente 20, 20′ müssen beachtet werden.

Die Übertragungselemente 20, 20′ sind flache Stahlbänder aus Federstahl, z.B. aus nicht rostendem Federstahl 1.4107.

Die Räder 12a, 14a, 19, 25 und Rollen 23, 24 können aus einem geeigneten Kunststoff sein, da sie keine hohen Tragkräfte übertragen, denn der Arm 10 ist über die Armantriebswelle 12 mit der Lagereinheit 17 gehalten, wobei das Melkzeug 5 mittels des Halters 11 über die Halterwelle 27 und deren Lager 27c, 27d im Arm 10 gehalten und gelagert ist.

Figur 14 zeigt eine Schnittansicht eines Haltergelenks 11a in einer Vertikalebene. Das Lager 27c auf dem Antriebsende 27a der Halterwelle ist in einer entsprechenden Aufnahme 10d aufgenommen. Der Sicherungsring 27a ist in einer nicht näher bezeichneten Bohrung des Gehäuses 10a in einer Nut eingesetzt und sichert das untere Lager 27d in axialer Richtung und setzt somit die Halterwelle 27 mit dem aufgebrachten Halterantriebsrad 25 fest. Das Halterantriebsrad 25 ist mittels Befestigungselementen 25b, z.B. Schrauben oder Nieten, drehfest mit der Halterwelle 27 verbunden.

Das Abtriebsende 27b der Halterwelle 27 wird in nicht näher dargestellter Weise mit einer nicht näher beschriebenen Halterverbindungseinrichtung 11c drehfest gekoppelt. An der Halterverbindungseinrichtung 11c ist der Halter 11 in nicht näher gezeigter Weis angebracht, z.B. mittels Schrauben, die in Figur 14 angedeutet sind.

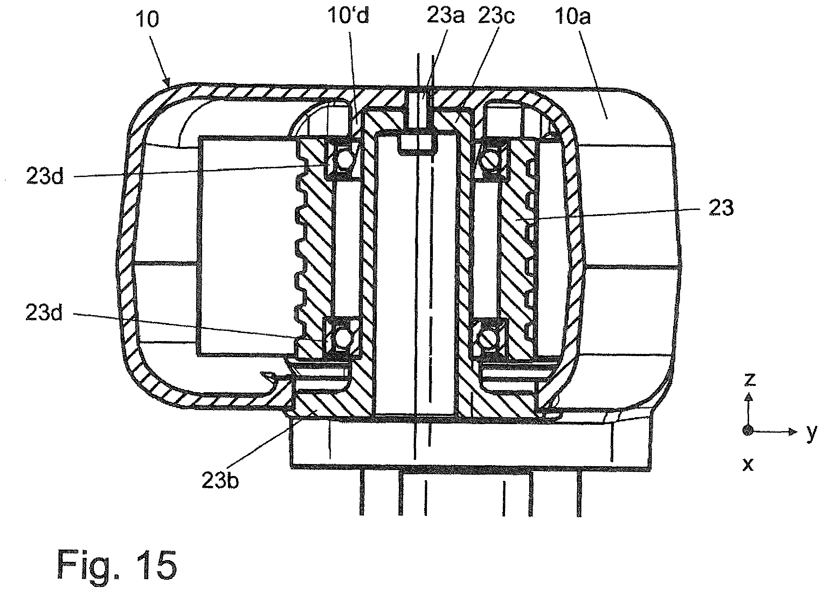

In Figur 15 ist eine Schnittansicht einer eingebauten Andruckrolle 23 gezeigt. Die Schnittebene liegt in einer Vertikalebene. Hier ist im Gegensatz zu Figur 8 und 9 eine Variante der Anbringung der Führungsrolle 23 dargestellt. Die Führungsrolle 23 ist über zwei Lager 23d auf einem Zapfen 23c um eine in Vertikalrichtung z angeordnete Achse drehbar gelagert. Dabei ist ein oberes Ende des Zapfens 23c in einer entsprechenden Aufnahme 10′d aufgenommen und mittels des Befestigungselementes 23a (hier von unten erreichbar) an der oberen Innenseite des Gehäuses 10a befestigt. Das untere Ende des Zapfens 23c ist mit der Platte 23b ausgebildet.

Die relativ schweren Motoren der Antriebseinheit 9 und/oder dazugehörigen Getriebe, nämlich der Armantrieb 14, der Halterantrieb 15 und der Vertikalantrieb 16 sind mit ihrer Anordnung in dem Rahmen 90 angeordnet. Außerdem sind die Armantriebswelle 12 mit der Halterantriebswelle 18 mit der zugehörigen Lagereinheit 17 ebenfalls in dem Rahmen 90 installiert. Diese gesamte Anordnung ist in dem Mittelabschnitt 4g des Platzteilers 4 eingebaut und bildet somit eine Basis für den bewegbaren Arm 10 und den daran beweglich angebrachten Halter 11 mit dem Melkzeug 5. Auf diese Weise sind diese relativ schweren Motoren und/oder Getriebe nicht auf oder in dem Arm 10 oder an oder in dem Halter 11 bzw. in den zugehörigen Gelenken 12b, 11a untergebracht, sondern sind in der Basis montiert. Daraus ergibt sich, dass das Gewicht von Arm 10 und Halter 11 im Gegensatz zu Armeinrichtungen mit integrierten Motoren und Getrieben wesentlich verringert ist. Mit anderen Worten, im Betrieb üben der Arm 10 und der Halter 11 lediglich nur eine geringe kinetische Energie in x-y-Ebenen (in z-Richtung erfolgen nur langsame Bewegungen mit geringerer Genauigkeit) aus. Dies wiederum ergibt den Vorteil, dass ein Melker und die automatische Armeinrichtung 6 mit dem Melkzeug 5 gleichzeitig bei einem Melkvorgang (Positionieren, Ansetzen, Melken, evtl. Wiederansetzen, Abnehmen) an dem zu melkenden Tier arbeiten können. Ein besonderer Schutzraum ist somit nicht erforderlich. Zudem vereinfacht sich eine Ansteuerung der Armeinheit in x-y-Ebenen, da die Armeinheit aufgrund der verringerten Trägheit bedeutend weniger Nachlauf aufweist und geringere Beschleunigungskräfte benötigt.

Die Armeinrichtung 6 mit den Übertragungselementen 20, 20′ erzielt somit folgende besondere Vorteile:
- Sehr geringe Toleranzen, auch nach langer Laufzeit
- Keine Elementelastizitäten
- Die Armeinrichtung 6 übt lediglich geringe kinetische Energie in x-y-Ebenen aus, da in dem Armgelenk 12b und in dem Haltergelenk 11a keine schweren Motoren und/oder Getriebe angebaut sind.
- Durch die geringe kinetische Energie können Mensch/Melker und Roboter bei einem Melkvorgang gleichzeitig an dem zu melkenden Tier (Kuh) arbeiten. Es ist kein Schutzraum erforderlich.
- Fast keine Walkarbeit der Zugmittel/Übertragungselemente 20, 20′ (dies ist insbesondere für Leichtgängigkeit, Handansetzen der Zitzenbecher 5a, Nachführbarkeit eines sich bewegenden Tieres), wobei unter Walkarbeit eine Verformung des Werkstoffs des Übertragungsmittels z.B. durch mechanische Einwirkungen wie Kneten, Drücken, Ziehen zu verstehen ist
- Unempfindlichkeit gegenüber Temperaturschwankungen
- Nur kleine zusätzliche bewegte Massen im TCP (Tool Center Point) (insbesondere bei Verwendung von Kunststoff-Umlenkrollen), dadurch ergibt sich eine bessere und schnellere Regelbarkeit
- Federstahlband ist kein Verschleißteil
- Es gibt keinen Polygonaleffekt (wie bei Kurbelstangen, Ketten, Zahnriemen), dadurch ergibt sich eine einfachere Regelbarkeit
- Keine großen Vorspannkräfte erforderlich, dadurch geringere Kräfte auf Lagerstellen
- Gewichtseinsparung durch Verwendung von Kunststoff als Werkstoff für viele Teile (Räder und Rollen)
- Im Wesentlichen Spielfreiheit, dadurch einfache Rückpositionierbarkeit des Melkzeugs bei Abstreifen/Abtreten/Herunterfallen
- Verringerte Verletzungsgefahr der zu melkenden Tiere

Die Erfindung ist nicht auf die oben dargestellten Ausführungsbeispiele beschränkt sondern im Rahmen der beigefügten Ansprüche modifizierbar.

Die Übertragungselemente 20, 20′ können auch nur teilweise mit einem metallischen Band ausgebildet sein, aber nicht gemäß der Erfindung, wobei die Abschnitte zwischen den Rädern 12a, 14a, 19, 25 jeweils ein metallische Band aufweisen, und die Abschnitte, welche die Räder 12a, 14a, 19, 25 umschlingen, dazu eine bestimmte Flexibilität besitzen, z.B. aus einem Stoffmaterial sind. Mit anderen Worten, die Übertragungselemente 20, 20′ können teilweise flexibel sein.

Es ist auch denkbar, aber nicht gemäß der Erfindung, dass die Ubertragungselemente 20, 20′ metallische Seilfasern aufweisen, wobei diese die gleichen Eigenschaften wie das metallische Band in Bezug auf Spielfreiheit und Verschleißfestigkeit haben.

So ist es z.B. auch denkbar, dass zusätzlich zur Schmutzabführung Abstreifer vorgesehen sein können, welche an geeigneter Stelle mit dem jeweiligen Übertragungselement 20, 20′ zusammenwirken.

Jeder Melkstand 3 kann eine Futtereinrichtung besitzen.

Das Melkzeug kann natürlich auch für milchgebende Tiere mit Eutern, die eine unterschiedliche Anzahl von Zitzen, z.B. 2, 3 oder 4, haben, verwendet werden.

Die Melkstandanordnung 1 als Melkkarussell kann so ausgebildet sein, dass auch mehrere 360° Drehungen für einen Melkvorgang eines bestimmten Tieres erfolgen können, wenn dies notwendig wird. Dann wird ein Auslass des Tieres aus dem Melkstand 3 verhindert, wenn dieser am Ausgang 8 ankommt.

Außerdem ist es denkbar, dass die Armeinrichtung 6 mit den Übertragungselementen 20, 20′ auch für weitere Roboteranwendungen einsetzbar ist.

### Bezugszeichen

- 1, 1', 1": Melkstandanordnung
- 2: Drehpunkt
- 3: Melkstand
- 3a, 3b: Tor
- 4: Platzteiler
- 4a, 4b: Pfosten
- 4c: Horizontalstange
- 4d: Verkleidung
- 4e: Aufnahme
- 4f: Hinterteilabschnitt
- 4g: Mittelabschnitt
- 4h: Kopfabschnitt
- 5: Melkzeug
- 5a: Zitzenbecher
- 5b: Melkzeugträger
- 6: Armeinrichtung
- 7: Zugang
- 8: Ausgang
- 9: Antriebseinheit
- 10: Arm
- 10a: Gehäuse
- 10b: Gehäuseunterteil
- 10c: Montageöffnung
- 10d, 10′d: Aufnahme
- 11: Halter
- 11a: Haltergelenk
- 11b: Halterachse
- 11c: Halterbefestigungseinrichtung
- 12: Armantriebswelle
- 12a: Armantriebsrad
- 12b: Armgelenk
- 12c: Armbefestigung
- 12d: Befestigungselement
- 12e: Hülse
- 12f: Armachse
- 13: Positionssensor
- 14: Armantrieb
- 14a: Armabtriebsrad
- 14b: Armabtriebsachse
- 15: Halterantrieb
- 16: Vertikalantrieb
- 17: Lagereinheit
- 17a,17b: Lager
- 18: Halterantriebswelle
- 18a: Antriebsende
- 18b: Abtriebsende
- 18c: Halterkupplung
- 18d,18e: Lager
- 19: Halterabtriebsrad
- 19a: Befestigungselement
- 20, 20′: Übertragungselement
- 20a, 20'a: Befestigungsabschnitt
- 21, 21′: Befestigungseinrichtung
- 21a, 21′a: Befestigungselement
- 21b: Zentrierabschnitt
- 22: Öffnung
- 22a: Umlaufnut
- 23: Führungsrolle
- 23a: Befestigungselement
- 23b: Platte
- 23c: Zapfen
- 23d: Lager
- 24: Andruckrolle
- 24a: Stellelement
- 24b: Platte
- 25: Halterantriebsrad
- 25a: Deckel
- 25b: Befestigungselement
- 26: Halteplatte
- 27: Halterwelle
- 27a: Antriebsende
- 27b: Abtriebsende
- 27c, 27d: Lager
- 27e: Sicherungsring
- 28: Abdeckung
- 28a: Montageöffnungsdeckel
- 29: Befestigungsöffnung
- 30: Nutenstein
- 31: Axialnut
- 32: Profil
- 33: Öffnung
- 90: Rahmen
- 90a, 90b: Tragelement
- 91, 91a: Vertikalführungslager
- 92, 92a: Vertikalführungselement
- α: Ansetzbereich
- β: Schwenkwinkel
- G, G′: Grube
- KS: Kopfseite
- HS: Hinterteilseite
- M: Melker
- T: Tier
- x, y: Koordinate
- z: Vertikalrichtung

## Patentansprüche

1. Armeinrichtung (6) für eine Melkstandanordnung (1, 1', 1") zum automatischen Melken von milchgebenden Tieren (T), aufweisend einen Arm (10) und einen damit verschwenkbar gekoppelten Halter (11) mit einem Melkzeug (5), wobei der Arm (10) mit einer Armantriebswelle (12) verbunden und um eine Armachse (12f) drehbar gelagert ist, wobei in der Armantriebswelle (12) eine Halterantriebswelle (18) unabhängig von der Armantriebswelle (12) drehbar gelagert ist, wobei die Armantriebswelle (12) und die Halterantriebswelle (18) mit einer Antriebseinheit (9) koppelbar ausgebildet sind, wobei die Armeinrichtung (6) mindestens ein Übertragungselement (20, 20′) als Zugmittel zur Übertragung von Dreh- bzw. Schwenkbewegungen aufweist, **dadurch gekennzeichnet, dass** das mindestens eine Übertragungselement (20, 20′) mit jeweiligen Rädern (12a und 14a; 19 und 25), mit welchen es zur Übertragung von Dreh- bzw. Schwenkbewegungen in Zusammenwirkung steht, jeweils fest verbunden ist, und dass das mindestens eine Übertragungselement (20, 20′) ein metallisches Band aufweist.

2. Armeinrichtung (6) nach Anspruch 1, **dadurch gekennzeichnet, dass** das mindestens eine Übertragungselement (20, 20′) ein Federstahlband ist.

3. Armeinrichtung (6) nach Anspruch 2, **dadurch gekennzeichnet, dass** das mindestens eine Übertragungselement (20, 20′) ein Federstahlband aus einem Edelstahl ist.

4. Armeinrichtung (6) nach einem der vorhergehenden Ansprüche, **dadurch gekennzeichnet, dass** das mindestens eine Übertragungselement (20, 20′) weiterhin mit Rollen (23, 24) zusammenwirkt.

5. Armeinrichtung (6) nach Anspruch 4, **dadurch gekennzeichnet, dass** die Räder (12a, 14a; 19, 25) und/oder Rollen (23, 24) jeweils einen Außendurchmesser aufweisen, der größer als ein minimaler Biegeradius des mindestens einen Übertragungselementes (20, 20′) ist.

6. Armeinrichtung (6) nach Anspruch 4 oder 5, **dadurch gekennzeichnet, dass** das mindestens eine Übertragungselement (20, 20′) eine Breite aufweist, welche einem Außendurchmesser der Räder (12a, 14a; 19, 25) und/oder Rollen (23, 24) entspricht.

7. Armeinrichtung (6) nach einem der Ansprüche 4 bis 6, **dadurch gekennzeichnet, dass** die Räder (12a, 14a; 19, 25) und/oder Rollen (23, 24) mit Öffnungen (22) und/oder Umlaufnuten (22a) zur Schmutzabführung versehen sind.

8. Armeinrichtung (6) nach einem der Ansprüche 4 bis 7, **dadurch gekennzeichnet, dass** mindestens eine der Rollen (23, 24) als Führungsrolle (23) zur Führung des mindestens einen Übertragungselementes (20, 20′) und mindestens eine der Rollen (23, 24) als Andruckrolle (24) zur Vorspannung des mindestens einen Übertragungselementes (20, 20′) ausgebildet sind.

9. Armeinrichtung (6) nach einem der vorhergehenden Ansprüche, **dadurch gekennzeichnet, dass** das mindestens eine Übertragungselement (20, 20′) an der jeweiligen Rolle (23, 24) mittels einer Befestigungseinrichtung (21, 21′) befestigt ist, die mindestens ein Befestigungselement (21a) und mindestens einen Nutenstein (30) umfasst.

10. Armeinrichtung (6) nach Anspruch 9, **dadurch gekennzeichnet, dass** das mindestens eine Befestigungselement (21a) der Befestigungseinrichtung (21, 21′) mindestens einen Zentrierabschnitt (21b) aufweist, welcher mit mindestens einer Befestigungsöffnung (29) des mindestens einen Übertragungselementes (20, 20′) in Zugrichtung des mindestens einen Übertragungselementes (20, 20′) im Wesentlichen spielfrei zusammenwirkt.

11. Armeinrichtung (6) nach Anspruch 10, **dadurch gekennzeichnet, dass** die mindestens eine Befestigungsöffnung (29) des mindestens einen Übertragungselementes (20, 20′) in einer Richtung parallel zu einer Achse des jeweiligen Rades (12a, 14a; 19, 25) eine Länge (z1) mit einer groben Toleranz aufweist.

12. Armeinrichtung (6) nach einem der vorhergehenden Ansprüche, **dadurch gekennzeichnet, dass** eine der Armeinrichtung (6) zuzuordnende Antriebseinheit (9) einen Armantrieb (14) zum Antrieb des Arms (10) aufweist, wobei eine Spanneinrichtung zur Spannung des mindestens einen Übertragungselementes (20) durch Verschiebung eines Armantriebs (14) vorgesehen ist.

13. Platzteiler (4) einer Melkstandanordnung (1, 1', 1") für mindestens einen Melkstand (3) zum Melken von milchgebenden Tieren (T), wobei der Platzteiler (4) an einer Längsseite des Melkstands (3) angeordnet ist, aufweisend eine Antriebseinheit (9) und eine mit dieser gekoppelte Armeinrichtung (6), welche einen Arm (10) und einen damit verschwenkbar gekoppelten Halter (11) mit einem Melkzeug (5) umfasst und welche aus einer Parkposition in eine Arbeitsposition und zurück verstellbar ist, wobei die Armeinrichtung (6) mit dem Melkzeug (5) in der Parkposition in dem Platzteiler (4) angeordnet ist und seitlich zu einem zu melkenden Tier (T) zwischen dessen Vorder- und Hinterbeine in die Arbeitsposition verstellbar ist, **dadurch gekennzeichnet, dass** die Armeinrichtung (6) nach mindestens einem der vorhergehenden Ansprüche ausgebildet ist.

14. Melkstandanordnung (1, 1', 1") zum Melken von milchgebenden Tieren, mit mindestens einem Platzteiler (4) nach Anspruch 13.

## Claims

1. An arm device (6) for a milking parlor arrangement (1, 1', 1") for automatically milking milk-producing animals (T), said arm device comprising an arm (10) and a holder (11), which is pivotably coupled therewith and has a milking cluster (5), wherein the arm (10) is connected to an arm drive shaft (12) and is mounted so as to be rotatable about an arm axis (12f), wherein a holder drive shaft (18) is mounted in the arm drive shaft (12) so as to be rotatable independently of the arm drive shaft (12), wherein the arm drive shaft (12) and the holder drive shaft (18) are realized so as to be couplable with a drive unit (9), wherein the arm device (6) comprises at least one transmission element (20, 20') as tensile means for transmitting rotary or pivoting movements, **characterized in that** the at least one transmission element (20, 20') is fixedly connected in each case to respective wheels (12a and 14a; 19 and 25), with which it interacts for transmitting rotary or pivoting movements, and that the at least one transmission element (20, 20′) comprises a metal band.

2. The arm device (6) as claimed in claim 1, **characterized in that** the at least one transmission element (20, 20′) is a spring steel band.

3. The arm device (6) as claimed in claim 2, **characterized in that** the at least one transmission element (20, 20′) is a spring steel band produced from a stainless steel.

4. The arm device (6) as claimed in one of the preceding claims, **characterized in that** the at least one transmission element (20, 20′) additionally interacts with rollers (23, 24).

5. The arm device (6) as claimed in claim 4, **characterized in that** the wheels (12a, 14a; 19, 25) and/or rollers (23, 24) comprise in each case an outside diameter which is greater than a minimum bending radius of the at least one transmission element (20, 20′).

6. The arm device (6) as claimed in claim 4 or 5, **characterized in that** the at least one transmission element (20, 20′) comprises a width which corresponds to an outside diameter of the wheels (12a, 14a; 19, 25) and/or rollers (23, 24).

7. The arm device (6) as claimed in one of preceding claims 4 to 6, **characterized in that** the wheels (12a, 14a; 19, 25) and/or rollers (23, 24) are provided with openings (22) and/or circumferential grooves (22a) for dirt removal.

8. The arm device (6) as claimed in one of preceding claims 4 to 7, **characterized in that** at least one of the rollers (23, 24) is realized as a guide roller (23) for guiding the at least one transmission element (20, 20′) and at least one of the rollers (23, 24) is realized as a pressing roller (24) for prestressing the at least one transmission element (20, 20′).

9. The arm device (6) as claimed in one of the preceding claims, **characterized in that** the at least one transmission element (20, 20′) is mounted to the respective roller (23, 24) by a fastening device (21, 21′) that includes at least one fastening element (21a) and at least one sliding block (30).

10. The arm device (6) as claimed in claim 9, **characterized in that** the at least one fastening element (21a) of the fastening device (21, 21′) comprises at least one centering portion (21b) which interacts in a substantially play-free manner with at least one fastening opening (29) of the at least one transmission element (20, 20') in the pulling direction of the at least one transmission element (20, 20′).

11. The arm device (6) as claimed in claim 10, **characterized in that** the at least one fastening opening (29) of the at least one transmission element (20, 20′) comprises a length (z1) with a rough tolerance in a direction parallel to an axis of the respective wheel (12a, 14a; 19, 25).

12. The arm device (6) as claimed in one of the preceding claims, **characterized in that** a drive unit (9) to be assigned to the arm device (6) comprises an arm drive (14) for driving the arm (10), wherein a stressing device is provided for stressing the at least one transmission element (20) as a result of displacing the arm drive (14).

13. A divider (4) of a milking parlor arrangement (1, 1', 1") for at least one milking parlor (3) for milking milk-producing animals (T), wherein the divider (4) is arranged on a longitudinal side of the milking parlor (3), comprising a drive unit (9) and an arm device (6) which is coupled to said drive unit (9) and includes an arm (10) and a holder (11), which is pivotably coupled thereto and has a milking cluster (5), and which is adjustable from a park position into an operating position and back, wherein in the park position the arm device (6) is arranged with the milking cluster (5) in the divider (4) and in the operating position is adjustable laterally to one of the animals (T) to be milked between the front and hind legs thereof, **characterized in that** the arm device (6) is realized as claimed in at least one of the preceding claims.

14. A milking parlor arrangement (1, 1', 1") for milking milk-producing animals, said milking parlor arrangement having at least one divider (4) as claimed in claim 13.

## Revendications

1. Dispositif de bras (6) pour un agencement de salle de traite (1, 1', 1") destiné à la traite automatique d'animaux producteurs de lait (T), présentant un bras (10) et un support (11) accouplé à celui-ci de manière pivotante et pourvu d'un faisceau trayeur (5), dans lequel le bras (10) est relié à un arbre d'entraînement de bras (12) et monté de manière rotative autour d'un axe de bras (12f), dans lequel un arbre d'entraînement de support (18) est monté de manière rotative dans l'arbre d'entraînement de bras (12) indépendamment de l'arbre d'entraînement de bras (12), dans lequel l'arbre d'entraînement de bras (12) et l'arbre d'entraînement de support (18) sont conçus de manière à pouvoir être accouplés à une unité d'entraînement (9), dans lequel le dispositif de bras (6) présente au moins un élément de transmission (20, 20′) sous la forme d'un moyen de traction pour transmettre des mouvements de rotation ou de pivotement, **caractérisé en ce que** ledit au moins un élément de transmission (20, 20′) est chaque fois solidaire de roues respectives (12a et 14a ; 19 et 25) avec lesquelles il coopère pour transmettre des mouvements de rotation ou de pivotement, et que ledit au moins un élément de transmission (20, 20′) présente une bande métallique.

2. Dispositif de bras (6) selon la revendication 1, **caractérisé en ce que** ledit au moins un élément de transmission (20, 20′) est une bande d'acier à ressort.

3. Dispositif de bras (6) selon la revendication 2, **caractérisé en ce que** ledit au moins un élément de transmission (20, 20′) est une bande d'acier à ressort en acier inoxydable.

4. Dispositif de bras (6) selon l'une des revendications précédentes, **caractérisé en ce que** ledit au moins un élément de transmission (20, 20') coopère en outre avec des rouleaux (23, 24).

5. Dispositif de bras (6) selon la revendication 4, **caractérisé en ce que** les roues (12a, 14a ; 19, 25) et/ou les rouleaux (23, 24) présentent chacun(e) un diamètre extérieur qui est supérieur à un rayon de courbure minimal dudit au moins un élément de transmission (20, 20′).

6. Dispositif de bras (6) selon la revendication 4 ou 5, **caractérisé en ce que** ledit au moins un élément de transmission (20, 20′) présente une largeur qui correspond à un diamètre extérieur des roues (12a, 14a ; 19, 25) et/ou des rouleaux (23, 24).

7. Dispositif de bras (6) selon l'une des revendications 4 à 6, **caractérisé en ce que** les roues (12a, 14a ; 19, 25) et/ou les rouleaux (23, 24) sont munis d'ouvertures (22) et/ou de rainures circonférentielles (22a) pour l'évacuation des salissures.

8. Dispositif de bras (6) selon l'une des revendications 4 à 7, **caractérisé en ce qu'**au moins un des rouleaux (23, 24) est conçu comme un rouleau de guidage (23) pour guider ledit au moins un élément de transmission (20, 20′) et au moins un des rouleaux (23, 24) est conçu comme un rouleau de pression (24) pour précontraindre ledit au moins un élément de transmission (20, 20′).

9. Dispositif de bras (6) selon l'une des revendications précédentes, **caractérisé en ce que** ledit au moins un élément de transmission (20, 20′) est fixé au rouleau respectif (23, 24) au moyen d'un dispositif de fixation (21, 21′) qui comprend au moins un élément de fixation (21a) et au moins un coulisseau (30).

10. Dispositif de bras (6) selon la revendication 9, **caractérisé en ce que** ledit au moins un élément de fixation (21a) du dispositif de fixation (21, 21′) présente au moins une section de centrage (21b) qui coopère avec au moins une ouverture de fixation (29) dudit au moins un élément de transmission (20, 20′) sensiblement sans jeu dans la direction de traction dudit au moins un élément de transmission (20, 20′).

11. Dispositif de bras (6) selon la revendication 10, **caractérisé en ce que** ladite au moins une ouverture de fixation (29) dudit au moins un élément de transmission (20, 20′) présente une longueur (z1) avec une tolérance grossière dans une direction parallèle à un axe de la roue respective (12a, 14a ; 19, 25).

12. Dispositif de bras (6) selon l'une des revendications précédentes, **caractérisé en ce qu'**une unité d'entraînement (9) à associer au dispositif de bras (6) présente un entraînement de bras (14) pour entraîner le bras (10), dans lequel un dispositif de tension est prévu pour tendre ledit au moins un élément de transmission (20) par déplacement d'un entraînement de bras (14).

13. Portillon de séparation (4) d'un agencement de salle de traite (1, 1', 1") pour au moins une salle de traite (3) destinée à la traite d'animaux producteurs de lait (T), le portillon de séparation (4) étant disposé sur un côté longitudinal de la salle de traite (3), présentant une unité d'entraînement (9) et un dispositif de bras (6) accouplé à celle-ci, lequel comprend un bras (10) et un support (11) accouplé à celui-ci de manière pivotante et pourvu d'un faisceau trayeur (5) et lequel peut être déplacé d'une position de stationnement dans une position de travail et inversement, dans lequel le dispositif de bras (6) avec le faisceau trayeur (5) est disposé en position de stationnement dans le portillon de séparation (4) et peut être déplacé latéralement en position de travail entre les pattes avant et arrière d'un animal à traire (T), **caractérisé en ce que** le dispositif de bras (6) est conçu selon au moins l'une des revendications précédentes.

14. Agencement de salle de traite (1, 1', 1") pour la traite d'animaux producteurs de lait, pourvu d'au moins un portillon de séparation (4) selon la revendication 13.
